# EUROPÄISCHE PATENTSCHRIFT

(11) **EP 3 199 243 B1**
(45) Veröffentlichungstag und Bekanntmachung des Hinweises auf die Patenterteilung: **12.05.2021**
(21) Anmeldenummer: 17020032.3
(22) Anmeldetag: 27.01.2017
(51) Int. Cl.: B05B 1/30, F16K 1/12, B05B 12/00, B05B 9/01, F16K 31/524, F16K 31/60, F16K 35/02, F16K 35/04

(54) **HANDVENTIL**
MANUAL VALVE
VALVE MANUELLE

(30) Priorität: 27.01.2016 DE 202016000470 U; 26.02.2016 DE 202016001236 U
(43) Veröffentlichungstag der Anmeldung: 02.08.2017
(73) Patentinhaber: Suttner GmbH, 33818 Leopoldshöhe (DE)
(72) Erfinder: Hartmann, Lothar, 33813 Oerlinghausen (DE); Zunkel, Steffen, 33813 Oerlinghausen (DE)
(74) Vertreter: Von Rohr Patentanwälte Partnerschaft mbB

(56) Entgegenhaltungen:
- WO-A1-98/46366
- GB-A- 930 958
- US-A- 3 396 911
- US-A1- 2007 278 442

## Beschreibung

Handventile der in Rede stehenden Art kommen vorzugsweise bei Reinigungsarbeiten, insbesondere im Lebensmittelbereich, zum Einsatz. Hier ist eine hohe Durchflussrate und gleichzeitig eine komfortable Bedienbarkeit - insbesondere aufgrund der vergleichsweise langen Einsatzdauer - wünschenswert. Zusätzlich ist ein zuverlässiges bzw. dichtendes Schließen des Handventils nach Beendigung und/oder bei Unterbrechung des Einsatzes vorteilhaft.

In diesem Umfeld ist beispielsweise aus der EP 2 845 650 A1 ein Handventil für Reinigungsarbeiten bekannt, bei dem durch Verschwenken eines Betätigungselements in eine Betätigungsrichtung ein Abheben eines Ventilelements von einem zugeordneten Ventilsitz in eine Öffnungsrichtung bewirkt wird. Darüber hinaus ist ein Spannelement vorgesehen, das zum Schließen des Handventils eine Rückstellkraft auf das Ventilelement entgegengesetzt zur Öffnungsrichtung ausübt.

WO 98/46366 A1 offenbart eine Sprühvorrichtung zum Mischen einer ersten Flüssigkeit, insbesondere Wasser, mit einer zweiten Flüssigkeit, insbesondere einer Chemikalie. Die zweite Flüssigkeit befindet sich in einem Behälter der an einem Sprühkopf befestigt werden kann. Der Sprühkopf weist ferner einen Einlass für die erste Flüssigkeit sowie einen Auslass für die gemischten Flüssigkeiten auf. Bei Betätigung eines Auslösers wird zunächst ein erstes Ventil geöffnet, so dass die erste Flüssigkeit den Sprühkopf durchströmen kann. Ein Weiterbewegen des Auslösers bewirkt das Öffnen eines zweiten Ventils, so dass die zweite Flüssigkeit aus dem Behälter der ersten Flüssigkeit beigemischt werden kann. Der Auslöser weist ferner eine Feder auf, die den Auslöser in eine neutrale Position, in der beide Ventile geschlossen sind, vorspannt.

US 3,396,911 A offenbart eine Sprühpistole zum Zerstäuben einer Flüssigkeit, insbesondere Farbe, bei der die Flüssigkeit in der Sprühpistole mit Luft vermischt wird. Die Sprühpistole weist hierzu einen zweistufigen Auslöser auf. Ein Verstellen des Auslösers in die erste Stufe bewirkt das vollständige Öffnen eines Ventils in der Sprühdüse, so dass ein Durchfluss der Flüssigkeit ermöglicht wird. Die Luftzufuhr zum Zerstäuben ist in der ersten Stufe ebenfalls maximal. Wenn die zweite Stufe des Auslösemechanismus erreicht ist, ist der Luftzufuhrkanal teilweise oder komplett geschlossen.

US 2007/278442 A1 offenbart eine Wasserpistole mit einer Vorrichtung zum Steuern des Wasserflusses. Durch Drücken und anschließendes Loslassen eines Betätigungshebels kann ein Benutzer sequentiell verschiedene Durchflussraten einstellen. Dies wird durch ein Ventil erreicht, das durch Drücken des Betätigungshebels vollständig geöffnet und um seine Längsachse rotiert wird. Beim Loslassen des Hebels wird dieser zurückgestellt und das Ventil nimmt, je nach Rotationsposition, eine offene, halboffene oder geschlossene Stellung ein.

GB 930 958 A offenbart eine Pistole zum Mischen und Ausgeben von ZweiKomponenten-Kleber. Die Pistole weist eine Mischkammer mit einem Mischer sowie einen Motor zum Antreiben des Mischers auf. Die Mischkammer hat jeweils einen mit einem Ventil ausgestatteten Einlass für jede Komponente. Bei Betätigen eines Auslösers wird der Motor gestartet und die Ventile freigegeben. Anschließend öffnen sich die Ventile, sobald eine Druckdifferenz zwischen den Komponenten und der Mischkammer groß genug ist, so dass die Komponenten in die Mischkammer gelangen, dort vermischt werden, und anschließend ausgegeben werden können.

Der vorliegenden Erfindung liegt die Aufgabe zugrunde, ein Handventil anzugeben, das eine sichere Bedienbarkeit, einen zuverlässigeren Betrieb und/oder eine komfortable Handhabung ermöglicht.

Die obige Aufgabe wird durch ein Handventil gemäß Anspruch 1 gelöst. Vorteilhafte Weiterbildungen sind Gegenstand der Unteransprüche.

Die Erfindung betrifft grundsätzlich ein Handventil, bei dem ein vorzugsweise hebelartiges Betätigungselement zum Öffnen des Handventils entlang einer Betätigungsrichtung von einer Schließstellung, in der das Handventil vorzugsweise geschlossen ist, in eine Offenstellung schwenkbar ist, in der das Ventil geöffnet ist.

Die Öffnung des Handventils ist insbesondere dadurch gekennzeichnet, dass eine fluidische Verbindung hergestellt wird, die ein Durchströmen des Handventils mit Fluid bzw. eine Ausgabe von Fluid ermöglicht, wohingegen durch Schließen des Handventils die fluidische Verbindung getrennt bzw. das Durchströmen des Handventils mit Fluid bzw. eine Ausgabe von Fluid gehemmt bzw. unterbunden wird.

Erfindungsgemäß ist ein Ventilelement vorgesehen, das einen Fluidstrom durch das Handventil in seiner Sperrstellung unterbindet bzw. das Handventil schließt. Es ist eine Freigabestellung des Ventilelements vorgesehen, in der das Ventilelement einen Fluidstrom durch das Handventil freigibt bzw. ermöglicht.

Durch Bewegung aus der Sperrstellung in eine Öffnungsrichtung ist das Ventilelement in seine Freigabestellung bewegbar, in der das Ventilelement den Fluidstrom freigibt bzw. das Handventil öffnet. Dies kann dadurch erreicht werden, dass das Ventilelement in seiner Sperrstellung dichtend an einem Ventilsitz anliegt, während es durch Bewegung in die Öffnungsrichtung bzw. Freigabestellung eine fluidische Passage zur Verfügung stellt, die mit Fluid durchströmbar ist. Letzteres wird vorzugsweise durch abrücken des Ventilelements von dem Ventilsitz erreicht.

Das Betätigungselement ist mit dem Ventilelement vorzugsweise derart gekoppelt, dass eine Bewegung des Betätigungselements in Betätigungsrichtung eine Bewegung des Ventilelements in seine Öffnungsrichtung bewirkt, wodurch das Handventil geöffnet werden kann. Die Bewegung des Betätigungselements führt vorzugsweise zu einer, insbesondere linearen, Bewegung des Ventilelements in Öffnungsrichtung.

Dadurch, dass das Betätigungselement auf das Ventilelement wirkt, korrespondieren Stellungen des Ventilelements vorzugsweise zu Stellungen des Betätigungselements oder umgekehrt.

So korrespondiert die Schließposition des Betätigungselements vorzugsweise zu der Sperrstellung des Ventilelements oder umgekehrt. Befindet sich also das Betätigungselement in seiner Schließposition, gelangt oder befindet sich das Ventilelement in einer Fluidstrom unterbindenden Sperrstellung, besonders bevorzugt in dichtender Anlage an dem Ventilsitz. Hierbei ist weiter bevorzugt, dass eine Bewegung des Betätigungselements aus seiner Schließposition in Öffnungsrichtung unmittelbar zur Bewegung des Ventilelements aus seiner Sperrstellung in Öffnungsrichtung bzw. zur Öffnung des Handventils führt.

Die Offenstellung des Betätigungselements korrespondiert vorzugsweise zu der Freigabestellung des Ventilelements oder umgekehrt. In der Offenstellung wirkt das Betätigungselement öffnend auf das Ventilelement, vorzugsweise wobei das Ventilelement durch das Betätigungselement von dem Ventilsitz abgerückt ist, so dass ein Fluidstrom ermöglicht wird. Eine Bewegung des Betätigungselements in seine Offenstellung führt also vorzugsweise dazu, dass das Ventilelement in seine Freigabestellung gelangt, bevorzugt bewegt wird. Insbesondere ist das Ventilelement in der Freigabestellung maximal vom Ventilsitz abgehoben und/oder weist das Handventil die höchste Durchflussrate auf.

Das Handventil weist erfindungsgemäß eine Rückstellvorrichtung auf, die dazu ausgebildet ist, nach Beendigung und/oder Unterbrechung des Einsatzes des Handventils bzw. mit dem Loslassen des Betätigungselements, also ohne eine in Betätigungsrichtung von außen auf die Betätigungseinrichtung wirkende Kraft, das Betätigungselement entgegengesetzt zur Betätigungsrichtung zu bewegen und/oder das Handventil zu schließen.

Die Rückstellvorrichtung des Handventils ist erfindungsgemäß dazu ausgebildet, das Betätigungselement über die Schließstellung hinaus entgegengesetzt zur Betätigungsrichtung in eine Endstellung zu bewegen. In vorteilhafter Weise kann hierdurch eine versehentliche Öffnung aufgrund von Erschütterungen o.dgl. vermieden werden, insbesondere indem ein Leerhub zwischen der Endstellung und der Schließstellung gebildet werden.

Erfindungsgemäß weist die Rückstellvorrichtung eine Rückstelleinrichtung auf, die eine Führungsfläche aufweist, wobei die Führungsfläche an einem Kontaktpunkt am Betätigungselement angreift, und wobei sich der Neigungswinkel der Führungsfläche zu einer Verbindungslinie zwischen Drehpunkt und Kontaktpunkt ausgehend von der Offenstellung des Betätigungselements entgegengesetzt zur Betätigungsrichtung verringert

Vorzugsweise ist die Rückstellvorrichtung dazu ausgebildet, eine entgegen der Betätigungsrichtung auf das Betätigungselement resultierende Rückstellkraft bei Bewegung des Betätigungselements in die Betätigungsrichtung zu reduzieren. Hierdurch kann die Haltekraft, die in Offenstellung manuell auf das Betätigungselement ausgeübt werden muss, um das Handventil in Offenstellung zu halten, reduziert werden. Dies hilft einer Ermüdung des Nutzers des Handventils, insbesondere bei langer Betätigung, vorzubeugen.

Vorzugsweise blockiert die Rückstellvorrichtung das Betätigungselement, wenn das Handventil geschlossen ist. Ferner weist das Handventil eine von dem Betätigungselement getrennt realisierte Freigabeeinrichtung auf, die dazu ausgebildet ist, bei Betätigung, insbesondere durch einen Nutzer, die durch die die Rückstellvorrichtung hervorgerufene Blockade des Betätigungselements aufzuheben. Die vorteilhafte Verwendung der Rückstellvorrichtung zur Blockade und Freigabe, die bevorzugt ist, ermöglicht es in vorteilhafter Weise, eine ressourcenschonende Sicherung und/oder einhändige Bedienung des Handventils bereitzustellen, insbesondere wenn die Freigabeeinrichtung auf einer dem Betätigungselement gegenüberliegenden Seite angeordnet oder gemeinsam mit dem Betätigungselement umgreifbar ist, wodurch die Freigabeeinrichtung gemeinsam mit dem Betätigungselement bedient werden kann.

Vorzugsweise ist das Ventilelement zum Öffnen des Handventils durch mindestens zwei unterschiedliche Wirkbereiche eines Wirkabschnitts des Betätigungselements mit unterschiedlichen Übersetzungsverhältnissen antreibbar. Alternativ oder zusätzlich ist das Betätigungselement durch einen, bevorzugt einseitigen, Hebel gebildet, wobei die Länge des Lastarms dieses Hebels durch Bewegung des Betätigungselements variiert. Dies kann durch die Wirkbereiche realisiert werden.

Die Veränderlichkeit des Übersetzungsverhältnisses bzw. der Lastarmlänge ermöglicht es, den Antrieb des Ventilelements für den Nutzer zu vereinfachen, indem die zur Betätigung notwendige Kraft zum Abheben des Ventilelements vom Ventilsitz und die in der Offenstellung aufzubringende Haltekraft reduziert werden können, während im übrigen Verlauf ein ausreichender Hub erreicht wird, um einen großen hydraulischen Durchmesser bzw. geringe Druckverluste am Ventil zu ermöglichen.

Vorzugsweise weist das Handventil eine Sperreinrichtung auf, die eine Bewegung des Betätigungselements und/oder des Ventilelements blockiert. Die Sperreinrichtung ist vorzugsweise durch die Rückstellvorrichtung gebildet und weist insbesondere eine Freigabeeinrichtung auf, die auf die Rückstellvorrichtung wirkt, um eine durch die Rückstellvorrichtung gebildete Blockade des Betätigungselements aufzuheben. In vorteilhafter Weise ermöglicht dies eine kompakte Konstruktion und komfortable Bedienung.

Vorzugsweise ist die Endstellung des Betätigungselements durch einen, der Schließstellung des Betätigungselements entgegen der Betätigungsrichtung nachgeordneten, Endanschlag gebildet, wobei sich die Endstellung von der Schließstellung unterscheidet.

Zwischen der Endstellung und der Schließstellung wird vorzugsweise ein Leerhub bzw. neutraler Bereich gebildet, in dem die Bewegung des Betätigungselements von der Bewegung des Ventilelements entkoppelt ist bzw. in dem eine Wirkung oder Wirkverbindung zwischen dem Ventilelement und dem Betätigungselement aufgehoben ist.

Mit anderen Worten wird durch die vorschlagsgemäße Lösung ein Betätigungsbereich, insbesondere Schwenkbereich, des Betätigungselements gebildet, in dem eine Bewegung des Betätigungselements keine dazu korrespondierende Bewegung, insbesondere Linearbewegung, des Ventilelements induziert.

Auf diese Weise wird das Betätigungselement aus der Endstellung als Ruhelage bei Bewegung in die Betätigungsrichtung zunächst in die Schließstellung bewegt, wobei das Ventil in seiner Sperrstellung verbleibt und/oder ein Leerhub gebildet ist. Eine Öffnung des Handventils erfolgt hierbei nicht. Dies minimiert in vorteilhafter Weise die Gefahr eines unerwünschten Öffnens des Handventils bei einem Erschütterung des Handventils infolge eines Sturzes o.dgl.

Vorzugsweise weist die Rückstellvorrichtung zwei Rückstelleinrichtungen auf oder ist hierdurch gebildet. Hierbei ist die erste Rückstelleinrichtung dem Ventilelement und die zweite Rückstelleinrichtung dem Betätigungselement zugeordnet. Hierbei weist die zweite Rückstelleinrichtung die erfindungsgemäße Führungsfläche auf.

Es ist bevorzugt, dass zwischen der Schließstellung und der Offenstellung des Betätigungselements bzw. der Sperrstellung und der Freigabestellung des Ventilelements sowohl die erste als auch die zweite Rückstelleinrichtung auf das Betätigungselement einwirken. Hierbei kann die erste Rückstelleinrichtung mittels des Ventilelements auf das Betätigungselement einwirken und/oder die zweite Rückstelleinrichtung unmittelbar bzw. ohne Beteiligung des Ventilelements auf das Betätigungselement einwirken. Alternativ oder zusätzlich ist es jedoch auch möglich, das lediglich die erste oder lediglich die zweite Rückstelleinrichtung wirkt.

Die zweite Rückstelleinrichtung ist vorzugsweise dazu ausgebildet, das Betätigungselement über die Schließstellung hinaus in die Endstellung zu bewegen. Hierzu wirkt die zweite Rückstelleinrichtung vorzugsweise unmittelbar auf das Betätigungselement und/oder unabhängig von der ersten Rückstelleinrichtung bzw. der Bewegung des Ventilelements. In diesem Bereich zwischen der Schließstellung und der Endstellung wirkt vorzugsweise lediglich die zweite Rückstelleinrichtung rückstellend bzw. entgegen der Betätigungsrichtung auf das Betätigungselement. Vorzugsweise sind in diesem Bereich die Rückstelleinrichtungen voneinander und/oder das Betätigungselement von dem Ventilelement entkoppelt. Dies hat sich als besonders vorteilhaft in Bezug auf ein sicheres Schließen des Handventils gezeigt.

Die zweite Rückstelleinrichtung kann die, insbesondere linear geführte, bewegbare und/oder verschiebbare Führungsfläche aufweisen, die (bevorzugt durch ein Spannelement) gegen das Betätigungselement gespannt ist bzw. drückt, um eine (resultierende) Kraft auf das Betätigungselement entgegen der Betätigungsrichtung des Betätigungselements zu bewirken. Hierdurch kann die zweite Rückstelleinrichtung das Betätigungselement entgegen der Betätigungsrichtung bewegen.

Vorzugsweise ist die Führungsfläche der zweiten Rückstelleinrichtung nach Erreichen der Schließstellung bzw. Wegfall der durch die erste Rückstelleinrichtung auf das Betätigungselement ausgeübten Rückstellkraft weiterhin (federbelastet) gegen das Betätigungselement entgegen der Betätigungsrichtung gespannt und initiiert somit eine Bewegung des Betätigungselements ausgehend von der Schließstellung in die Endstellung.

Vorzugsweise ist die zweite Rückstelleinrichtung zur Haltekraftentlastung in der Offenstellung des Betätigungselements ausgebildet.

Das Handventil ist vorzugsweise dazu ausgebildet, mit zunehmender Bewegung des Betätigungselements in die Betätigungsrichtung die entgegen der Betätigungsrichtung auf das Rückstellelement wirkende Rückstellkraft zu reduzieren. Aufgrund der Charakteristik der Rückstellvorrichtung, insbesondere der zweiten Rückstelleinrichtung, kann die insgesamt bzw. resultierend rückstellend bzw. entgegen der Betätigungsrichtung auf das Betätigungselement wirkende Kraft bei Bewegung des Betätigungselements in die Betätigungsrichtung, vorzugsweise jedenfalls im Bereich oder in der Nähe der Offenstellung, reduziert werden. Hierdurch ist ein komfortabler Dauerbetrieb möglich.

Diese Charakteristik wird vorzugsweise dadurch realisiert, dass in der Offenstellung des Betätigungselements durch die zweite Rückstelleinrichtung eine Kraftkomponente am Betätigungselement angreift, die reduziert entgegen der Betätigungsrichtung, in der Betätigungsrichtung oder nicht entlang der Betätigungsrichtung des Betätigungselements wirkt. In der Offenstellung des Betätigungselements kann die zweite Rückstelleinrichtung der ersten Rückstelleinrichtung entgegenwirken bzw. die zweite Rückstelleinrichtung kann dazu ausgebildet sein, dass die gesamte auf das Betätigungselement wirkende Rückstellkraft reduziert oder minimal im Vergleich zu den übrigen Stellungen des Betätigungselements ist, jedoch nach wie vor insgesamt resultierend entgegen der Betätigungsrichtung wirkt. Dies reduziert in der Offenstellung des Betätigungselements eine durch den Benutzer auf das Betätigungselement aufzuwendende Haltekraft zur Kompensation der durch die Rückstellvorrichtung eingeleiteten Rückstellkraft. Hierdurch wir eine kraftschonende Handhabung des Handventils, insbesondere bei hoher Einsatzdauer des Handventils, ermöglicht. Gleichzeitig kann ein sicheres Schließen des Handventils gewährleistet werden, insbesondere dadurch, dass bei Bewegung des Betätigungselements entgegen der Betätigungsrichtung die Rückstellkraft zunimmt und somit ein zügiger Schließvorgang erreicht wird.

Vorzugsweise vergrößert sich die entgegen der Betätigungsrichtung auf das Betätigungselement wirkende Rückstellkraft im Verlauf des Schließvorgangs des Handventils, insbesondere also bei Bewegung des Betätigungselements aus der Offenstellung in Richtung oder in die Schließstellung.

Besonders bevorzugt vergrößert sich die durch die zweite Rückstelleinrichtung entgegen der Betätigungsrichtung auf die Betätigungseinrichtung wirkende Kraftkomponente kontinuierlich oder stufenweise nach dem Loslassen des Betätigungselements bzw. Wegfall der Haltekraft im Verlauf des Schließvorgangs des Handventils. Insbesondere wird das Betätigungselement im Verlauf des Schließvorgangs kontinuierlich oder diskontinuierlich durch die zweite Rückstelleinrichtung beschleunigt. Mit anderen Worten wird das Schließen des Handventils durch die zweite Rückstelleinrichtung im Verlauf des Schließvorgangs zunehmend unterstützt. Dies gestattet ein sicheres und/oder schonendes Schließen des Handventils.

Vorzugsweise ist eine Dämpfungsvorrichtung für das Betätigungselement vorgesehen, wobei die Dämpfungseinrichtung die Bewegung des Betätigungselements entgegen der Betätigungsrichtung dämpft. Dies ermöglicht einen schonenden, weniger ruckartigen Schließvorgang, insbesondere vor dem Hintergrund, dass mit der Schließbewegung die Rückstellkraft zunehmen kann.

Die Dämpfungsvorrichtung ist vorzugsweise durch eine Dämpfungseinrichtung und ein Gegenlagerelement gebildet oder weist diese auf. Die Dämpfungsvorrichtung ist vorzugsweise zwischen dem Betätigungselement und einem Außengehäuse des Handventils vorgesehen. Die Dämpfwirkung des Dämpfelements kann durch Relativbewegung des Betätigungselements zum unbeweglichen Außengehäuse erreicht werden.

Vorzugsweise ist ein Dämpfelement, insbesondere in Form eines Zylinders und/oder Kolbens einer hydraulischen und/oder pneumatischen und/oder mechanischen Dämpfungseinrichtung, gegen das Gegenlagerelement verspannt, um eine zumindest im Wesentlichen permanente Anlage und folglich Funktionsfähigkeit zu gewährleisten. Die Verspannung kann unter Einwirkung eines Spannelements, insbesondere einer in dem Dämpfelement vorgesehenen Feder, erfolgen.

Die Dämpfungseinrichtung und das Gegenlagerelement sind vorzugsweise getrennt voneinander realisiert. Vorzugsweise liegen diese lediglich aneinander an. Die Dämpfungseinrichtung ist vorzugsweise mit dem Betätigungselement (starr oder drehfest) verbunden oder hieran angelenkt und das Gegenlagerelement an einem Außengehäuse befestigt oder angelenkt, oder umgekehrt. Insbesondere ist die Dämpfungseinrichtung zumindest im Wesentlichen im Betätigungselement aufgenommen. Das Gegenlagerelement kann im Querschnitt rund, zylindrisch und/oder abgerundet ausgebildet und/oder in dem Außengehäuse des Handventils gehalten sein.

Das Dämpfungselement weist vorzugsweise einen Stößel oder Schaft auf, der gegen das Gegenlagerelement verspannt ist. Besonders bevorzugt bildet das Gegenlagerelement ein Loslager für die Dämpfungseinrichtung, deren Dämpfungselement an dem Gegenlagerelement verschiebbar anliegt bzw. entlanggleitet, wenn sich das Betätigungselement bewegt. Dies ermöglicht einen kompakten bzw. einfachen Aufbau. Es ist jedoch möglich, dass hierdurch eine Kraft auf das Betätigungselement in Betätigungsrichtung resultiert.

Vorzugsweise ist die Rückstellvorrichtung dazu ausgebildet, in der Schließstellung des Betätigungselements eine Kraft auf das Betätigungselement entgegen der Betätigungsrichtung auszuüben, die größer als eine durch eine Dämpfungsvorrichtung ausgeübte Kraft auf das Betätigungselement in Betätigungsrichtung ist.

Dies gewährleistet, dass in der Schließstellung des Betätigungselements eine resultierende Kraft bzw. ein resultierendes Drehmoment am Betätigungselement angreift, die bzw. das entgegengesetzt zur Betätigungsrichtung des Betätigungselements gerichtet ist. Dies gewährleistet ein sicheres bzw. zuverlässiges Schließen des Handventils.

In Verbindung mit der Lehre der vorliegenden Erfindung ergibt sich dabei insbesondere der Vorteil, dass das Betätigungselement durch die Rückstellvorrichtung, insbesondere die zweite Rückstelleinrichtung, entgegen der durch die Dämpfungsvorrichtung eingeleiteten Kraft in eine der Schließstellung nachgeordnete Endstellung des Betätigungshebels bewegbar ist. Folglich ist das Betätigungselement in der Endstellung mittels der Rückstellvorrichtung entgegengesetzt zur Betätigungsrichtung gespannt.

Vorzugsweise bildet das Betätigungselement einen bevorzugt einseitigen Habel, dessen Kraftarm konstanter Länge manuell betätigbar ist und dessen Lastarm eine Länge aufweist, die mit Bewegung bzw. Auslenkung des Betätigungselements variiert. Hierzu kann das Betätigungselement am Ventilelement aufgrund der Bewegung in oder entgegen der Betätigungsrichtung mit unterschiedlichen Wirkabschnitten angreifen. Der Kraftarm erstreckt sich vorzugsweise zwischen Drehpunkt und Griffbereich des Betätigungselements, wohingegen sich der Lastarm zwischen Drehpunkt und dem jeweiligen Wirkabschnitt bzw. dem Wirkbereich erstreckt.

Ein einseitiger Hebel im Sinne der vorliegenden Erfindung ist vorzugsweise eine hebelartige Konstruktion, die nur einen von einem endseitigen Drehpunkt erstreckten Arm aufweist. Bei einem einseitigen Hebel fallen Lastarm und Kraftarm unterschiedlicher Länge zusammen, da der Drehpunkt sich an einem Ende des Hebels befindet. Dies ist im Sinne der vorliegenden Erfindung bevorzugt konstruktiv zu verstehen, so dass es dieselbe armartige bzw. länglich ausgebildete Einrichtung ist, die auf derselben Seite des Drehpunkts sowohl Kraftarm als auch Lastarm bildet. Es ist jedoch vorzugsweise keine Voraussetzung, dass Kraftarm und Lastarm - gebildet durch gedachte Verbindungslinien zwischen dem gemeinsamen Drehpunkt und den Punkten, an denen Kräfte angreifen - parallel verlaufen. Es ist im Sinne der vorliegenden Erfindung auch möglich, dass Kraft- und Lastarm einen Winkel einschließen.

Das Ventilelement, vorzugsweise eine insbesondere schulterartige Führungsfläche des Ventilelements, ist vorzugsweise über einen Wirkbereich des Betätigungselements mit einer Kraft beaufschlagbar, mit der das Betätigungselement auf das Ventilelement einwirken kann. Das Betätigungselement weist im Wirkbereich vorzugsweise zwei unterschiedliche Wirkabschnitte aufweist, so dass das Ventilelement abhängig vom wirksamen Wirkabschnitt mit unterschiedlichen Übersetzungsverhältnissen antreibbar ist. Vorzugsweise bildet das Betätigungselement bzw. der Wirkabschnitt hierzu einen, vorzugsweise zweistufigen, mechanischen Kraftwandler.

Durch das Antreiben des Ventilelements über unterschiedliche Übersetzungsverhältnisse wird ein kraftschonendes Öffnen des Handventils ermöglicht, da das Ventilelement, das im geschlossenen Zustand ggfs. auch durch Fluiddruck in den Ventilsitz gedrückt wird, zunächst mit geringerem manuellem Kraftaufwand durch den kürzeren Lastarm bewegt wird, bis es vom Ventilsitz abgehoben ist. Die weitere Betätigung erfolgt dem vorzugsweise mit längerem Lastarm.

Vorzugsweise ist der Wirkabschnitt derart ausgebildet, dass der Wirkbereich mit dem größeren Übersetzungsverhältnis zwischen der Sperrstellung und einer Zwischenstellung des Ventilelements auf das Ventilelement einwirkt. Dies dient einer kraftschonenden bzw. komfortablen Überwindung bzw. Überkompensation der auf das Ventilelement wirkenden Rückstellkraft und der - in Sperrposition am größten ausgebildete - durch den Fluiddruck entgegen der Öffnungsrichtung auf das Ventilelement wirkenden Kraft. Die Zwischenstellung ist vorzugsweise dadurch charakterisiert, dass in oder um die Zwischenstellung das Übersetzungsverhältnis geändert wird bzw. die Länge des Lastarms geändert wird, vorzugsweise dadurch, dass ein anderer Wirkbereich mit anderem Abstand vom Drehpunkt des Betätigungselements am Ventilelement angreift.

Vorzugsweise weist das Handventil eine Sperreinrichtung, insbesondere einen Sperrriegel, auf, der dazu ausgebildet ist, eine Bewegung des Ventilelements und/oder des Betätigungselements über die Schließstellung des Handventils hinaus in Betätigungsrichtung zu blockieren. Dies verhindert ein unbeabsichtigtes Öffnen bzw. eine unbefugte Benutzung des Handventils.

Vorzugsweise weist die Sperreinrichtung ein schwenkbares Sperrelement auf, das den Betätigungshebel (endseitig) hintergreift. Dies gestattet ein intuitives bzw. komfortables Sperren und Entsperren des Betätigungshebels, so dass eine Bewegung des Betätigungselements in Betätigungsrichtung über die Schließposition hinaus verhindert wird.

Das Handventil weist vorzugsweise eine Längserstreckungsrichtung mit einem Eingang und einem Ausgang für das Fluid auf, wobei der Eingang und der Ausgang an gegenüberliegenden Enden des Handventils entlang der Längserstreckungsrichtung angeordnet sind.

Das Ventilelement ist vorzugsweise als rohrförmiger Dichtkolben ausgebildet und/oder zwischen einer Sperrstellung und einer Freigabestellung des Ventilelements entlang einer Strömungsrichtung des Fluids und/oder der Längserstreckungsrichtung des Handventils durchströmbar.

Durch diese räumliche Anordnung bzw. Ausgestaltung des Ventilelements ist es möglich, ein kompaktes Handventil zu bauen, welches eine günstige, d. h. druckverlustarme Führung der Fluidströmung entlang der Längserstreckungsrichtung des Handventils ermöglicht.

Die voranstehenden und nachfolgend anhand von Ausführungsbeispielen erläuterten Aspekte der vorliegenden Erfindung können unabhängig voneinander und in einer beliebigen Kombination miteinander sowie auch in beliebigen Kombinationen mit weiteren Aspekten und Merkmalen der vorliegenden Erfindung verwirklicht werden und vorteilhaft sein.

Weitere Merkmale, Vorteile und Aspekte der vorliegenden Erfindung ergeben sich aus den Ansprüchen und der nachfolgenden Beschreibung bevorzugter Ausführungsform anhand der Zeichnungen. Es zeigt:
- Fig. 1: einen schematischen Schnitt eines vorschlagsgemäßen Handventils mit Betätigungselement in Endstellung und Ventilelement in Sperrstellung;
- Fig. 2: einen schematischen Schnitt des vorschlagsgemäßen Handventils gemäß Fig. 1 mit Betätigungselement in Offenstellung und Ventilelement in Freigabestellung;
- Fig. 3: eine ausschnittsweise Vergrößerung des Handventils aus Fig. 1 im Bereich des Ventilelements und des Ventilsitzes;
- Fig. 4: eine ausschnittsweise Vergrößerung des Handventils aus Fig. 1 im Bereich der Dämpfungsvorrichtung;
- Fig. 5A: einen mechanischen Freischnitt des Betätigungselements in Endstellung;
- Fig. 5B: einem mechanischen Freischnitt des Betätigungselements in Schließstellung;
- Fig. 5C: einem mechanischen Freischnitt des Betätigungselements in Schaltstellung;
- Fig. 5D: einem mechanischen Freischnitt des Betätigungselements in Offenstellung;
- Fig. 6A: eine ausschnittsweise Vergrößerung der zweiten Rückstelleinrichtung in Endstellung;
- Fig. 6B: eine ausschnittsweise Vergrößerung der zweiten Rückstelleinrichtung in Schließstellung;
- Fig. 6C: eine ausschnittsweise Vergrößerung der zweiten Rückstelleinrichtung in Schaltstellung;
- Fig. 6D: eine ausschnittsweise Vergrößerung der zweiten Rückstelleinrichtung in Offenstellung;
- Fig. 7: eine geschnittene Seitenansicht des vorschlagsgemäßen Handventils in der Endstellung des Betätigungselements;
- Fig. 8A: eine ausschnittsweise Vergrößerung in der geschnittenen Seitenansicht gemäß Fig. 7 in einem ersten Wirkzustand;
- Fig. 8B: eine ausschnittsweise Vergrößerung in der geschnittenen Seitenansicht gemäß Fig. 7 in einem zweiten Wirkzustand;
- Fig. 8C: eine ausschnittsweise Vergrößerung in der geschnittenen Seitenansicht gemäß Fig. 7 in einem dritten Wirkzustand;
- Fig. 8D: eine ausschnittsweise Vergrößerung in der geschnittenen Seitenansicht gemäß Fig. 7 in einem vierten Wirkzustand; und
- Fig. 9: einen schematischen Schnitt eines vorschlagsgemäßen Handventils mit Betätigungselement in Endstellung und Ventilelement in Sperrstellung.

In den Figuren werden für gleiche und ähnliche Bauteile und Komponenten die gleichen Bezugszeichen verwendet, wobei sich entsprechende Eigenschaften, Vorteile und Merkmale ergeben können, auch wenn von einer wiederholten Beschreibung abgesehen wird.

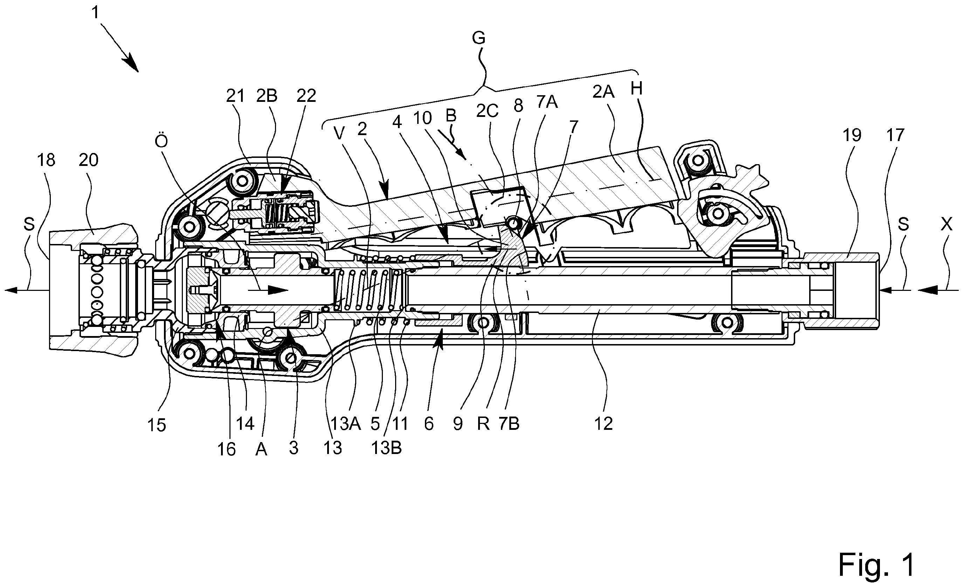

Fig. 1 zeigt ein vorschlagsgemäßes Handventil 1. Das Handventil 1 ist vorzugsweise zur Absperrung, Freigabe und/oder Regelung des Durchflusses eines Fluids, vorzugsweise von Wasser, ausgebildet.

Das Handventil 1 weist vorzugsweise ein Betätigungselement 2 mit einem Griffbereich G zur manuellen Betätigung des Handventils 1 durch einen (nicht dargestellten) Nutzer auf.

Vorzugsweise ist das Betätigungselement 2 hebelartig ausgebildet. Beim Ausführungsbeispiel ist das Betätigungselement 2 entlang einer Betätigungsrichtung B bewegbarund um einen Drehpunkt A schwenkbar. Durch Bewegung des Betätigungselements 2 in Betätigungsrichtung B öffnet das Handventil 1.

Vorzugsweise ist das Handventil 1 derart ausgebildet, das zum Öffnen des Handventils 1 durch Krafteinwirkung auf den Griffbereich G des Betätigungselements 2 ein Ventilelement 3 entlang einer, vorzugsweise linearen, Öffnungsrichtung Ö bewegbar ist.

Das Betätigungselement 2 ist vorzugsweise als einseitiger Schwenkhebel mit einem Betätigungsarm 2A und mindestens einem quer, insbesondere zumindest im Wesentlichen senkrecht, zum Betätigungsarm 2A verlaufenden Betätigungsschenkel 2B ausgebildet. Im Darstellungsbeispiel weist der Betätigungsarm 2A gegenüber dem Betätigungsschenkel 2B eine größere Längserstreckung auf. Vorzugsweise bilden der Betätigungsarm 2A und der Betätigungsschenkel 2B Schenkel eines zumindest im Wesentlichen L-förmigen bzw. armartigen Betätigungselements 2.

Vorzugsweise greift der Betätigungsschenkel 2B des Betätigungselements 2 am Ventilelement 3 an. Insbesondere wirkt das Betätigungselement 2 über den Betätigungsschenkel 2B öffnend auf das Ventilelement 3.

Besonders bevorzugt weist das Betätigungselement 2 zwei Betätigungsschenkel 2B auf, die das Ventilelement 3, insbesondere gabelartig, umgreifen. Dies gestattet ein symmetrisches Angreifen der beiden Betätigungsschenkel 2B des Betätigungselements 2 am Ventilelement 3.

Der Griffbereich G befindet sich zumindest im Wesentlichen entlang der gesamten Längserstreckung des Betätigungsarms 2A bzw. an dessen offenen oder dem Drehpunkt A abgewandten Ende. Der Betätigungsarm 2A ist vorzugsweise so ausgebildet bzw. angeordnet, dass das Handventil 1 im Bereich des Betätigungsarms 2A von einer Hand eines (nicht dargestellten) Nutzers umgreifbar ist.

Das Handventil 1 weist vorzugsweise eine Rückstellvorrichtung 4 auf, die dazu ausgebildet ist, das Betätigungselement 2 entgegengesetzt zur Betätigungsrichtung B und/oder das Ventilelement 3 entgegengesetzt zur Öffnungsrichtung Ö zu bewegen.

Die Rückstellvorrichtung 4 weist vorzugsweise eine erste Rückstelleinrichtung 5 auf. Im Darstellungsbeispiel weist die erste Rückstelleinrichtung 5 ein Spannelement, vorzugsweise eine Feder, insbesondere Schraubenfeder, auf, um das Ventilelement 3 entgegen der Öffnungsrichtung Ö zu bewegen.

Das Ventilelement 3 ist vorzugsweise mittels der ersten Rückstelleinrichtung 5 in einer in Fig. 1 gezeigten Sperrposition des Ventilelements 3 entgegen der Öffnungsrichtung Ö gegen einen zugeordneten Ventilsitz 16 gespannt.

Die Rückstellvorrichtung 4 weist alternativ oder zusätzlich zur ersten Rückstelleinrichtung 5 eine zweite Rückstelleinrichtung 6 auf. Die zweite Rückstelleinrichtung 6 wirkt vorzugsweise unmittelbar auf das Betätigungselement 2. Hierbei ist vorgesehen, dass die zweite Rückstelleinrichtung 6 (unmittelbar) eine Kraft auf die Betätigungseinrichtung 2 entgegen der Betätigungsrichtung B bewirkt, um das Betätigungselement 2 in seine Schließstellung bzw. Endstellung (auch Ruheposition genannt) zu bewegen.

Die Rückstelleinrichtung 6 weist eine Führungsfläche 7, insbesondere Kulisse, auf, die vorzugsweise linear entlang einer Bewegungsrichtung R bewegbar ist.

Vorzugsweise ist die Bewegungsrichtung R der Führungsfläche 7 beim Öffnungsvorgang des Handventils 1 entgegengesetzt zur Öffnungsrichtung Ö des Ventilelements 3 und/oder beim Schließvorgang des Handventils 1 in Öffnungsrichtung Ö des Ventilelements 3 ausgerichtet, oder umgekehrt.

Vorzugsweise ist die Führungsfläche 7 durch ein, vorzugsweise hülsenförmiges, Rückstellelement 9 geführt, im Darstellungsbeispiel einstückig hiermit gebildet. Besonders bevorzugt ist die Führungsfläche 7 durch einen nockenförmigen bzw. radial vorspringenden Führungsvorsprung 10 des Rückstellelements 9 gebildet.

Vorzugsweise weist das Betätigungselement 2 ein Fenster 2C bzw. eine Ausnehmung bzw. Aufnahme auf, die zumindest im Wesentlichen komplementär zum Führungsvorsprung 10 ausgebildet und/oder zur Aufnahme des Führungsvorsprungs 10 ausgebildet ist.

Vorzugsweise weist das Betätigungselement 2 ein Führungselement 8, vorzugsweise eine Laufrolle oder einen Gleiter, auf, das auf die Führungsfläche 7 der zweiten Rückstelleinrichtung 6 drückt, um ein Rückstellen zu bewirken.

Besonders bevorzugt ist die zweite Rückstelleinrichtung 6 und/oder die Führungsfläche 7 und/oder das Rückstellelement 9 mittels eines Spannelements 11, vorzugsweise einer Feder, insbesondere Schraubenfeder, gegen das Betätigungselement 2, insbesondere das Führungselement 8, gespannt. Hierdurch wird eine Kraftkomponente entgegen der Betätigungsrichtung B auf das Betätigungselement 2 bewirkt.

Vorzugsweise ist das Führungselement 8 drehbar am Betätigungselement 2, insbesondere am Betätigungsarm 2A des Betätigungselements 2, gelagert und/oder weist eine Rolle auf. Jedoch ist auch eine drehfeste oder sonstige Lagerung des Führungselements 8 am Betätigungselement 2 möglich.

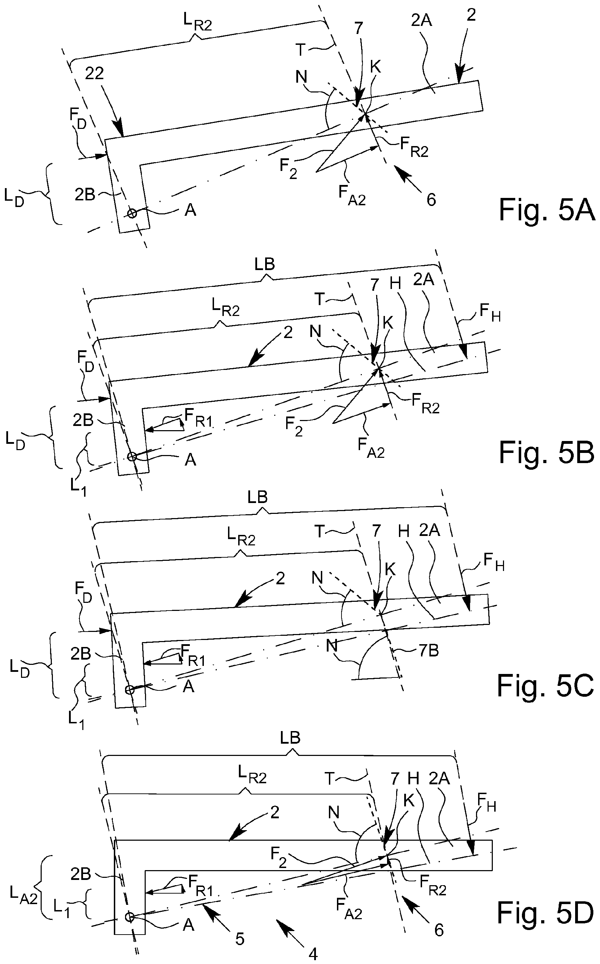

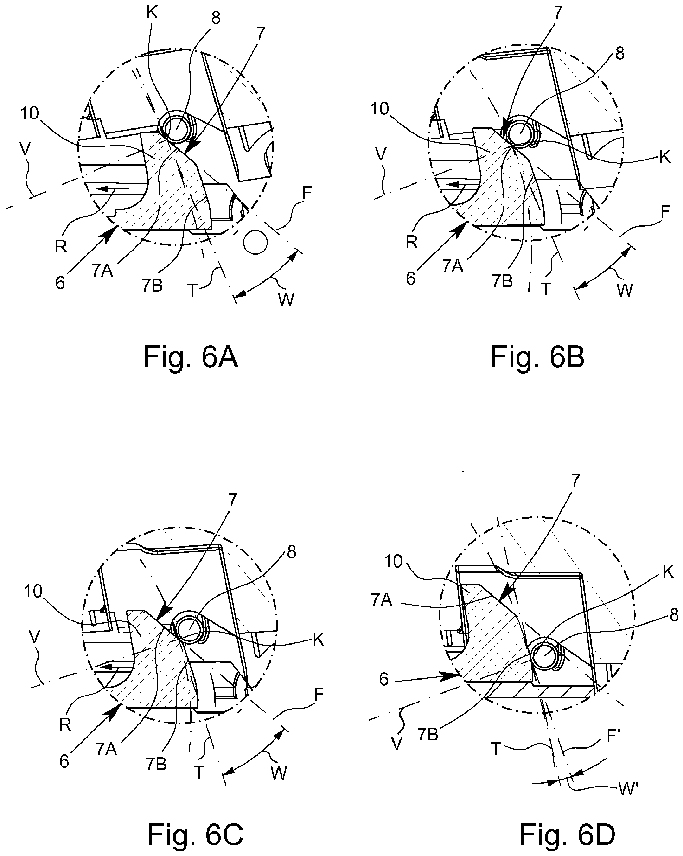

Gemäß einem Aspekt der vorliegenden Erfindung ist die Rückstellvorrichtung 4, insbesondere die zweite Rückstelleinrichtung 6 der Rückstellvorrichtung 4, dazu ausgebildet, das Betätigungselement 2 über die Schließstellung hinaus in eine Endstellung zu bewegen. Auf diesen Aspekt wird im Zusammenhang mit den Fig. 5A bis 5D und Fig. 6A bis 6D noch genauer eingegangen.

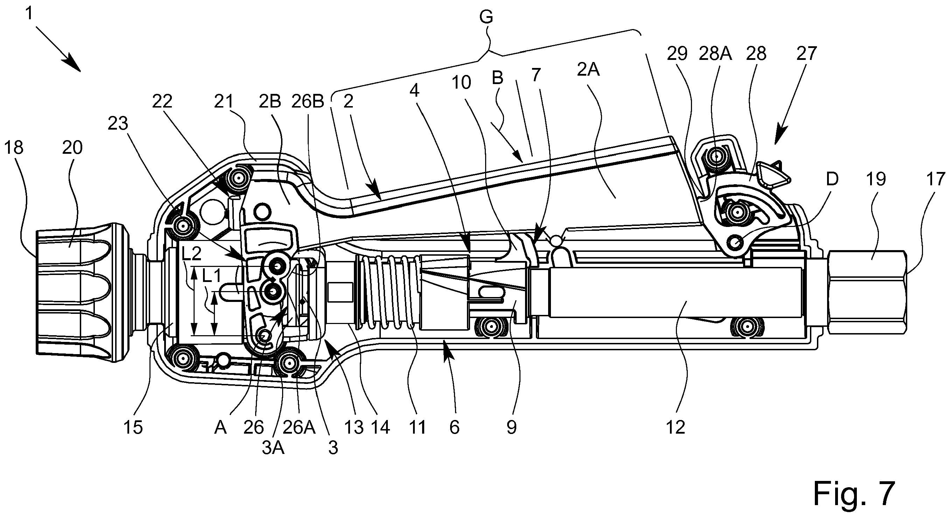

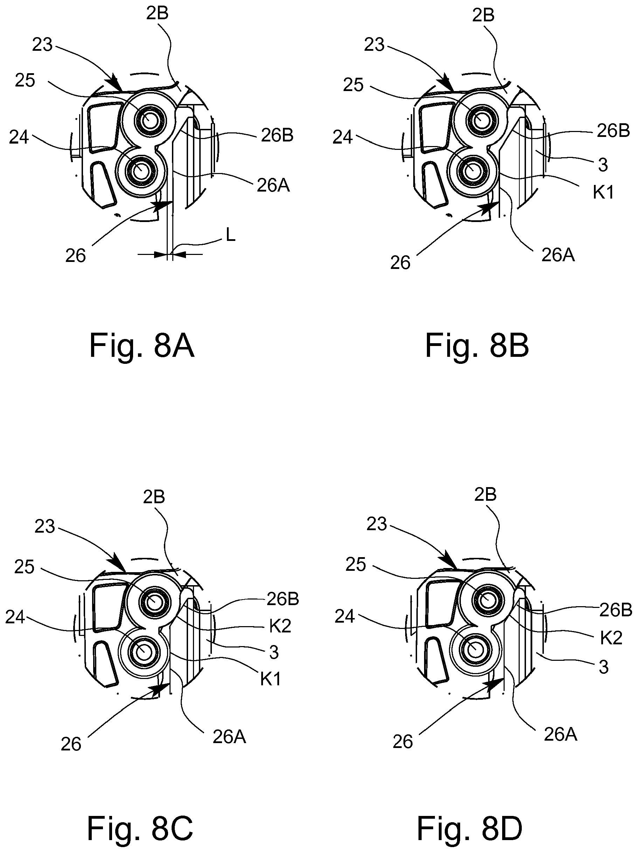

Vorzugsweise ist in der Endstellung des Betätigungselements 2 der Betätigungsschenkel 2B unter Bildung eines Leerhubs L vom Ventilelement 3, insbesondere einer Führungsfläche 26 des Ventilelements 3, abgehoben, wie in Fig. 7 und insbesondere Fig. 8A ersichtlich.

Vorzugsweise beträgt in der Endstellung des Betätigungselements 2 der zwischen dem Betätigungsschenkel 2B bzw. Wirkabschnitt 23 des Betätigungselements 2 und dem Ventilelement 3, insbesondere der Führungsfläche 26 des Ventilelements 3, gebildete Leerhub L weniger als 1 cm, vorzugsweise weniger als 8 mm, besonders bevorzugt weniger als 6 mm und/oder mehr als 0,5 mm, vorzugsweise mehr als 1 mm, insbesondere mehr als 1,5 mm. Dies ermöglicht einen guten Kompromiss zwischen Sicherheit und Komfort.

Vorzugsweise weist das Handventil 1 stromauf des Ventilelements 3 und/oder der ersten Rückstelleinrichtung 5 ein Rohrstück 12 auf. Insbesondere ist das Rohrstück 12 länglich und/oder zum Transport und/oder Führen des Fluids entlang einer Strömungsrichtung S des Fluids ausgebildet.

Vorzugsweise ist die zweite Rückstelleinrichtung 6 zumindest im Wesentlichen außen am Rohrstück 12 angeordnet und/oder geführt.

Im Darstellungsbeispiel ist die zweite Rückstelleinrichtung 6, insbesondere das Rückstellelement 9, längsverschieblich, insbesondere gleitend, am oder auf dem Rohrstück 12 geführt. Insbesondere ist das Rohrstück 12 teilweise von dem Rückstellelement 9 umfasst bzw. umhüllt. Dies ermöglicht eine sehr kompakte Realisierung der zweiten Rückstelleinrichtung 6.

Vorzugsweise weist das Handventil 1 ein Ventilgehäuse 13 auf, das, vorzugsweise form-, kraft- und/oder stoffschlüssig, mit dem Rohrstück 12 verbunden, insbesondere mit diesem verschraubt und/oder verklemmt ist und/oder einstückig hiermit gebildet ist.

Besonders bevorzugt weist das Ventilgehäuse 13 einen, vorzugsweise stegartigen bzw. radial vorspringenden Halteabschnitt 13A, insbesondere einen Anschlag, eine Schulter, und/oder eine Ausbuchtung zum Halten des Spannelements 11 der zweiten Rückstelleinrichtung 6 auf. Vorzugsweise ist das in Bewegungsrichtung B linear bewegbare bzw. verschiebbare und/oder in Öffnungsrichtung Ö und/oder entgegen der Strömungsrichtung S federbelastete Rückstellelement 9 am Halteabschnitt 13A des Ventilgehäuses 13 gegengelagert.

Beim Darstellungsbeispiel ist die zweite Rückstelleinrichtung 6, insbesondere das Rückstellelement 9, mittels des Spannelements 11 in Öffnungsrichtung Ö des Ventilelements 3 und/oder entgegengesetzt zur Strömungsrichtung S des Fluids gegen das Betätigungselement 2 gespannt.

Alternativ ist es möglich, die zweite Rückstelleinrichtung 6, insbesondere das Rückstellelement 9, in Öffnungsrichtung Ö und/oder Strömungsrichtung S des Fluids zu spannen. In diesem Fall ist das Rückstellelement 9 vorzugsweise an einer (nicht dargestellten), senkrecht zur Strömungsrichtung S und/oder Längserstreckung des Rohrstücks 12 und/oder Öffnungsrichtung Ö des Ventilelements 3 verlaufenden Achse oder Ebene gespiegelt am Rohrstück 12 orientiert. Bei diesem Beispiel bietet es sich beispielsweise an, den Halteabschnitt 13A zum Halten des Spannelements 11 stromauf des Rückstellelements 9 am Rohrstück 12 vorzusehen. Vorzugsweise ist das Rückstellelement 9 dann in Strömungsrichtung S und/oder Öffnungsrichtung Ö gegen das Betätigungselement 2, insbesondere das Führungselement 8, gespannt, vorzugsweise derart, dass das Betätigungselement 2 entgegen seiner Betätigungsrichtung B gedrückt wird.

Die erste Rückstelleinrichtung 5 ist vorzugsweise dazu ausgebildet, das Ventilelement 3 entgegen der Öffnungsrichtung Ö bzw. in Richtung des Ventilsitzes 16 zu bewegen. Hierzu kann die erste Rückstelleinrichtung 5 ein Spannelement aufweisen, das zwischen einem unbeweglichen Teil des Handventils 1 und dem Ventilelement 3 angeordnet ist. Die erste Rückstelleinrichtung 5 ist vorzugsweise in dem Ventilgehäuse 13 angeordnet, aufgenommen und/oder in diesem gehalten.

Besonders bevorzugt weist das Ventilgehäuse 13 einen, vorzugsweise radial nach innen vorspringenden, Halteabschnitt 13B, insbesondere einen Anschlag, eine Schulter und/oder Verengung, auf, an der sich die erste Rückstelleinrichtung 5 abstützt. Die erste Rückstelleinrichtung 5 ist insbesondere am Halteabschnitt 13B gegengelagert, sodass das Ventilelement 3 mittels der ersten Rückstelleinrichtung 5 in Strömungsrichtung S bzw. entgegen der Öffnungsrichtung Ö des Ventilelements 3 gegen den Ventilsitz 16 bzw. in dessen Richtung gespannt ist.

Das Betätigungselement 2 ist erfindungsgemäß schwenkbar um einen Drehpunkt A, vorzugsweise am Ventilgehäuse 13 oder mit diesem verbundenen Teil, gelagert.

Das Handventil 1 weist eine Längserstreckungsrichtung X mit einem Eingang 17 und einem Ausgang 18 für das Fluid auf, wobei der Eingang 17 und der Ausgang 18 an gegenüberliegenden Enden des Handventils 1 entlang der Längserstreckungsrichtung X angeordnet sind.

Vorzugsweise ist das Rohrstück 12 stromauf mit einem Eingangsgehäuse 19 verbunden, insbesondere verschraubt.

Besonders bevorzugt weist das Handventil 1, vorzugsweise das Ausgangsgehäuse 15, einen, vorzugsweise düsenartigen, Ausgangsstutzen 20 auf.

Vorzugsweise weist das Handventil 1 ein Außengehäuse 21 auf. Vorzugsweise ist das Ausgangsgehäuse 21 schalenartig ausgebildet und/oder umgibt das Ventilgehäuse 13 und/oder das Rohrstück 12 bzw. ist hiermit verbunden, insbesondere starr.

Das vorschlagsgemäße Handventil 1 ist vorzugsweise in druckführende und nicht druckführende Gehäuseteile aufgeteilt. Die druckführenden Gehäuseteile sind vorzugsweise das Rohrstück 12, das Ventilgehäuse 13, das Ausgangsgehäuse 15 sowie das Eingangsgehäuse 19. Diese sind vorzugsweise zumindest im Wesentlichen rotationssymmetrisch gestaltet und/oder koaxial angeordnet, was vorteilhaft im Hinblick auf die Fertigung der Gehäuse und die Aufnahme der durch den Fluiddruck angeordnet Kräfte ist. Umgeben werden sie durch das Außengehäuse 21. Dieses ist vorzugsweise nicht druckführend, wodurch bei der Gestaltung dieses Gehäuseteils größere Freiheitsgrade bei der Gestaltung der Form und der Auswahl der verwendeten Werkstoffe bestehen.

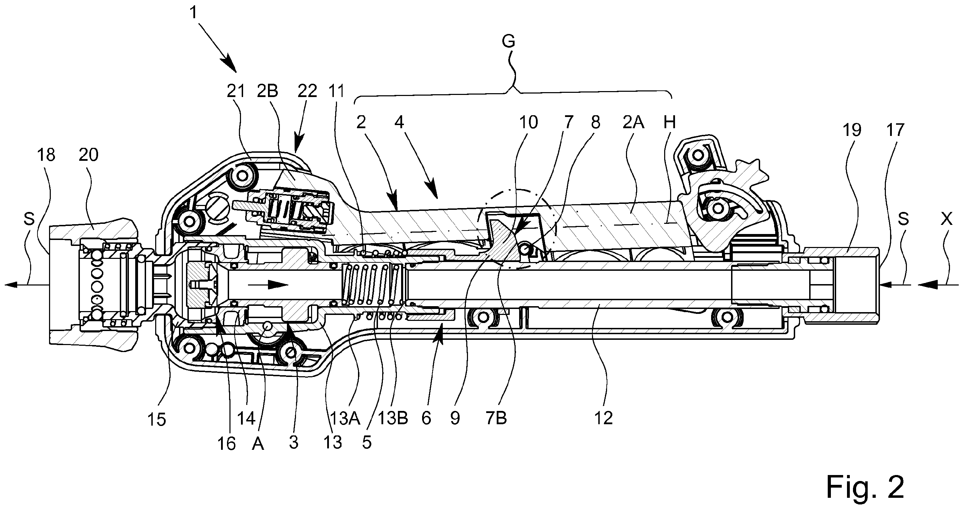

Fig 2. zeigt das vorschlagsgemäße Handventil 1 mit dem Betätigungselement 2 in Offenstellung bzw. dem Ventilelement 3 in Freigabestellung, in der das Ventilelement 3 maximal vom Ventilsitz 16 abgehoben ist, sodass in dieser Stellung das Handventil 1 eine maximale Durchflussrate aufweist.

Vorzugsweise ist das Ventilelement 3 als rohrartiger oder rohrförmiger Dichtkolben ausgebildet. Das Ventilelement 3 ist entlang der Strömungsrichtung S des Fluids durchströmbar. Das Ventilelement 3 weist vorzugsweise einen Dichtungsabschnitt 36A, insbesondere eine Dichtfläche bzw. Dichtkante, auf, der zum Verschließen des Handventils 1 an den Ventilsitz 16 angelegt, vorzugsweise angedrückt, werden kann. Der Dichtabschnitt 36A ist vorzugsweise stirnseitig und/oder endseitig am Ventilelement 3 vorgesehen und folglich bevorzugt ringartig bzw. ringförmig.

Der Ventilsitz 16 korrespondiert vorzugsweise zu dem Dichtabschnitt 36A. Hierzu kann der Ventilsitz 16 zumindest abschnittsweise konisch ausgebildet sein, um eine sichere Anlage der ringartigen bzw. zumindest im Wesentlichen kreisförmigen Dichtkante des Dichtkolbens zu ermöglichen. Alternativ oder zusätzlich kann der Ventilsitz 16 auch flach ausgebildet oder durch eine zumindest im Wesentlichen konische Innenfläche gebildet sein.

Der Ventilsitz 16 ist vorzugsweise von dem Fluid umströmbar. Vorzugsweise wird das Fluid im Bereich des Ventilsitzes 16, vorzugsweise hüllkurvenartig und/oder im Querschnitt ringförmig bzw. kreisförmig, um den Ventilsitz 16 herumgelenkt.

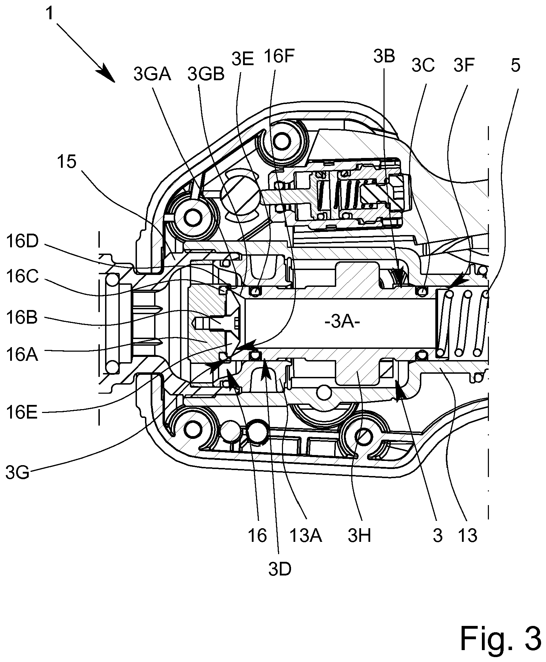

Nachfolgend wird mit Bezug auf Fig. 3 die genaue Ausgestaltung des Ventilelements 3 und des Ventilsitzes 16 des vorschlagsgemäßen Handventils 1 im Detail erläutert.

Vorzugsweise weist das Ventilelement 3 einen Kanalabschnitt 3A auf, der eine Passage für das Fluid entlang der Längserstreckung des Ventilelements 3 bildet.

Vorzugsweise ist das Ventilelement 3 abgedichtet und/oder längsverschieblich im Ventilgehäuse 13 geführt. Hierzu weist das Ventilelement 3 an seiner Außenkontur eine eingangsseitige, vorzugsweise zylindrische, Dichtfläche 3B auf. Die Dichtfläche 3B weist vorzugsweise ein Dichtungselement 3C, insbesondere eine Dichtung wie einen O-Ring, auf, so dass die eingangsseitige zylindrische Dichtfläche 3B gegen das Ventilgehäuse 13 abgedichtet ist. Alternativ oder zusätzlich kann das Dichtungselement 3C auch ventilgehäuseseitig vorgesehen sein. Die zylindrische Dichtfläche 3B und/oder das Ventilgehäuse 13 ist insbesondere durch eine Nut zur Aufnahme und/oder Halterung des Dichtungselements 3C ausgebildet. Die eingangsseitige Dichtfläche 3B ist durch das Dichtungselement 3C im Ventilgehäuse 13 geführt.

Vorzugsweise weist das Ventilelement 3 an seiner Außenkontur eine ausgangsseitige Dichtfläche 3D auf. Mit dieser Dichtfläche 3D wirkt ein Dichtungselement 3E zusammen. Durch das Dichtungselement 3E wird das Ventilelement 3 ausgangsseitig gegen das Ventilgehäuse 13 abgedichtet und/oder in diesem geführt. Insbesondere ist die ausgangsseitige Dichtfläche 3D zur Aufnahme des Dichtungselements 3E ausgebildet.

Vorzugsweise ist das Handventil 1 und/oder Ventilelement 3 zumindest im Wesentlichen druckausgeglichen ausgebildet. Dies bietet Vorteile bei dem bevorzugten Arbeitsdruck des Handventils 1 von mehr als 8 Bar, vorzugsweise mehr als 15 Bar, insbesondere mehr als 20 Bar und/oder weniger als 60 Bar, vorzugsweise weniger als 55 Bar, insbesondere weniger als 50 Bar, da eine unbeabsichtigte Bewegung des Ventilelements 3 in Sperrstellung und/oder Freigabestellung des Ventilelements 3 durch den Fluiddruck verhindert wird.

Insbesondere sind die jeweiligen Oberflächen des Ventilelements 3, auf die der Druck des Fluids eine Kraft in Öffnungsrichtung Ö bzw. entgegengesetzt zur Öffnungsrichtung Ö des Fluids ausübt, derart gestaltet, dass zwischen der Sperrstellung und der Freigabestellung des Ventilelements 3 eine durch den Fluiddruck induzierte Bewegung des Ventilelements 3 wirksam verhindert wird.

Beim gezeigten Ventilelement 3 betrifft dies eine dem Eingang 17 zugewandte ringartige Stirnfläche 3F und eine dem Ausgang 18 zugewandte ringartige Stirnfläche 3G.

Vorzugsweise sind die eingangsseitige Fläche 3F und die ausgangsseitige Fläche 3G derart dimensioniert, dass das Ventilelement 3 gemäß der in Fig. 2 gezeigten Freigabestellung des Ventilelements 3 und/oder in der Schließstellung druckausgeglichen ist. Hierzu können Projektionen der Stirnfläche 3F und der Stirnfläche 3G in Öffnungsrichtung Ö vorzugsweise zumindest im Wesentlichen gleich groß sein. Dies ermöglicht eine Druckausgeglichenheit des Ventilelements 3, wodurch ein auf das Ventilelement 3 wirkender Fluiddruck nicht zu einer Kraft in oder entgegen der Öffnungsrichtung Ö führt.

Vorzugsweise ist die dem Ausgang zugewandte, bevorzugt ringförmige Stirnfläche 3G durch den Dichtungsabschnitt 3GA und einen Druckabschnitt 3GB gebildet.

Insbesondere wird der Dichtungsabschnitt 3GA durch eine ringförmige Fläche und/oder der Druckabschnitt 3GB durch eine (konische) Schrägfläche gebildet. Die Schrägfläche ist vorzugsweise so ausgebildet, dass sie im geschlossenen Zustand des Handventils 1 druckbeaufschlagt ist, so dass eine in Öffnungsrichtung Ö wirkende Kraftkomponente durch den Fluiddruck erzeugt wird, die zumindest im Wesentlichen eine durch Fluiddruck erzeugte Kraftkomponente entgegen der Öffnungsrichtung Ö kompensiert.

Insbesondere ist der Druckabschnitt 3GB der ausgangsseitigen Fläche 3G durch eine zum Inneren des Ventilelements 3 hin geneigte, insbesondere zumindest im Wesentlichen konische, Schrägfläche gebildet, an der der Fluiddruck mit einer Kraftkomponente in Öffnungsrichtung Ö des Ventilelements 3 angreifen kann.

Der Druckabschnitt 3GB des Ventilelements 3 ist vorzugsweise durch eine stromab zunehmende Querschnittserweiterung gebildet, die am stromabwärtsseitigen Ende bzw. der stromabwärtsseitigen Stirnseite in den Dichtungsabschnitt 3GA mündet. Der Dichtungsabschnitt 3GA ist vorzugsweise ein Ende, eine stirnseitige Kante oder stirnseitige Dichtfläche des Ventilelements 3.

Der Dichtungsabschnitt 3GA liegt in Schließstellung vorzugsweise auf einer Ventilsitzdichtung 16D des Ventilsitzes 16 dichtend an. Bei der Ventilsitzdichtung 16D handelt es sich vorzugsweise um ein, insbesondere ringartiges oder ringförmiges Formteil, bevorzugt gebildet mit oder aus einem Elastomer, PTFE oder einem sonstigen zur Bildung einer Dichtung geeigneten Kunststoff.

Die Ventilsitzdichtung 16D ist vorzugsweise mittels eines scheibenartigen Strömungselements 16E mit dem Ventilsitz 16 verbunden. Hierbei ist bevorzugt, dass das Strömungselement 16E die Ventilsitzdichtung 16D formschlüssig am Ventilsitz 16 hält, insbesondere indem das Strömungselement 16E die Ventilsitzdichtung 16D teilweise überragt oder übergreift.

Im Darstellungsbeispiel ist die Ventilsitzdichtung 16D zumindest im Wesentlichen L-förmig, wird durch das Strömungselement 16E nur teilweise überdeckt und bildet in einem nicht von dem Strömungselement 16E überdeckten Abschnitt eine Dichtfläche für bzw. korrespondierend zu dem Dichtungsabschnitt 3GA des Ventilelements 3. Das Ventilelement 3 liegt also in Schließstellung dichtend an der nicht durch das Strömungselement 16E abgedeckten Dichtfläche der Ventilsitzdichtung 16D an.

Der Dichtungsabschnitt 3GA des Ventilelements 3 ist vorzugsweise eine sehr klein gehaltene Stirnfläche des Ventilkolbens 3, die außen, am äußeren Rand und/oder zumindest im Wesentlichen mit einer äußeren Wandung des Ventilelements 3 fluchtend angeordnet ist. Dies ermöglicht die Bildung des Druckabschnitts 3GB, um sowohl im geschlossenen als auch im geöffneten Zustand eine durch Fluiddruck hervorgehobene Kraftkomponente in Öffnungsrichtung Ö zu bewirken, die im Vergleich von geschlossenem und geöffnetem Handventil 1 nur geringfügig voneinander abweicht oder zumindest im Wesentlichen gleich ist.

Im Darstellungsbeispiel wird dies dadurch erreicht, dass der Druckabschnitt 3GB eine vielfach größere Fläche im Vergleich zu dem Dichtungsabschnitt 3GA aufweist, wobei der Druckabschnitt 3GB so vorgesehen ist, dass er sowohl im geschlossenen als auch im geöffneten Zustand mit Fluiddruck beaufschlagt ist.

Dadurch, dass der Dichtungsabschnitt 3GA eine relativ geringe Fläche umfasst, wird zudem eine hohe Flächenpressung im Dichtspalt und in Folge dessen eine gute Dichtwirkung auch bei hohen Druckbeaufschlagungen erreicht.

Das Strömungselement 16E fungiert vorzugsweise primär zur Sicherung der Ventilsitzdichtung 16D und kann folglich auch als Sicherungselement bzw. Sicherungsscheibe bezeichnet werden, insbesondere wobei die Sicherungsscheibe im Darstellungsbeispiel mittels eines Befestigungsmittels, insbesondere der Schraube 16B, durch einen zentrischen, mittigen bzw. entlang einer Rotationssymmetrieachse vorgesehenen Durchbruch hindurch derart befestigt ist, dass die Ventilsitzdichtung 16D gehalten wird.

Im Darstellungsbeispiel wird das Strömungselement 16E frontal angeströmt. Das Strömungselement 16E ist in Richtung der Ventilsitzdichtung 16D verjüngt. Hierdurch kann das Strömungselement 16E in Schließstellung jedenfalls teilweise in das Ventilelement 3 eintauchen. Dies ermöglicht eine stabile und kompakte Konstruktion des Strömungselements 16E und in Folge dessen eine sichere Halterung der Ventilsitzdichtung 16D.

Alternativ oder zusätzlich ermöglicht der sich in Richtung der Ventilsitzdichtung 16D verjüngende Querschnitt des Strömungselements 16E eine zumindest im Wesentlichen kontinuierliche Strömungsführung. Hierbei ist bevorzugt, dass eine dem Ventilelement 3 zugwandte, angeströmte Oberfläche, vorzugsweise zumindest im Wesentlichen kontinuierlich, in eine dem Ventilelement 3 zugewandte Stirnfläche der Ventilsitzdichtung 16D übergeht.

Alternativ oder zusätzlich ist bevorzugt, dass die dem Ventilelement 3 zugewandte Stirnfläche der Ventilsitzdichtung 16D auf der dem Strömungselement 16E abgewandten Seite, vorzugsweise zumindest im Wesentlichen kontinuierlich, in eine in Offenstellung umströmte Oberfläche des Grundkörpers 16A des Ventilsitzes 16 übergeht. Dies ermöglicht eine wirbelarme bzw. verschleißarme Umströmung des Ventilsitzes 16 bei geöffnetem Handventil 1. Im Darstellungsbeispiel wird in vorteilhafter Weise das zumindest im Wesentlichen druckausgeglichene Verhalten sowohl in der Sperrstellung als auch in der Freigabestellung des Ventilelements 3 dadurch ermöglicht, dass der Dichtungsabschnitt 3GA spitz bzw. kantenartig und/oder am radial äußeren Ende des Druckabschnitts 3GB vorgesehen ist, wodurch der Druckabschnitt 3GB im Vergleich der Sperrstellung und der Freigabestellung des Ventilelements 3 nur unmaßgeblich verändert wird, also in allen Stellungen auf der Druckseite angeordnet bzw. mit Fluiddruck beaufschlagt ist.

Vorzugsweise weist das Ventilelement 3 einen, vorzugsweise kragenartigen, schulterartigen bzw. radial vorspringenden, Betätigungsabschnitt 3H auf. Besonders bevorzugt bildet der Betätigungsabschnitt 3H eine Führungsfläche 26 des Ventilelements 3, an der eine Kraft in Öffnungsrichtung Ö auf das Ventilelement 3 wirken kann.

Wie bereits erwähnt, liegt in der Sperrstellung das Ventilelement 3 mit dem Dichtungsabschnitt 3GA dichtend am Ventilsitz 16 auf.

Beim Darstellungsbeispiel ist der Ventilsitz 16 lösbar bzw. form- und/oder kraftschlüssig, vorzugsweise mittels Verschrauben, mit dem Außengehäuse 15 verbunden. Jedoch ist auch eine einstückige Ausbildung des Außengehäuses 15 mit dem Ventilsitz 16 möglich.

Vorzugsweise ist der Ventilsitz 16 durch einen Grundkörper 16A gebildet. Vorzugsweise ist der Grundkörper 16A mittels eines Befestigungselements 16B, vorzugsweise einer Schraube, mit dem Ausgangsgehäuse 15 verbunden.

Vorzugsweise weist der Ventilsitz 16, insbesondere der Grundkörper 16A des Ventilsitzes 16, die Ventilsitzdichtung 16D, insbesondere einen O-Ring, auf, so dass in der Sperrstellung des Ventilelements 3 der Ventilsitz 16 gegen das Ventilelement 3 abgedichtet ist und/oder das Ventilelement 3 mit der ausgangsseitigen Fläche 3G, insbesondere mit dem Dichtungsabschnitt 3GA, dichtend an der Ventilsitzdichtung 16D aufliegt.

Vorzugsweise weist der Ventilsitz 16, insbesondere der Grundkörper 16A, eine Dichtungsaufnahme 16C, insbesondere eine ringförmige Ausnehmung, zur Aufnahme der Ventilsitzdichtung 16D auf. Vorzugsweise ist die Ventilsitzdichtung 16D korrespondierend bzw. kongruent zum Dichtungsabschnitt 3GA ausgebildet bzw. entspricht eine wirksame effektive Dichtungsfläche der Ventilsitzdichtung 16D in der Sperrstellung des Ventilelements 3 zumindest im Wesentlichen dem Dichtungsabschnitt 3GA der ausgangsseitigen Fläche 3G des Ventilelements 3.

Bei geöffnetem Handventil 1 bzw. beim Ventilelement 3 in Freigabestellung gemäß Fig. 2 wird das Fluid bzw. die Strömungsrichtung S des Fluids um den Ventilsitz 16 herumgelenkt. Insbesondere wird das Fluid bzw. die Strömungsrichtung S des Fluids um das Strömungselement 16E des Ventilsitzes herumgelenkt. Insbesondere weist das Strömungselement 16E eine entgegen der Strömungsrichtung S gerichtete, konisch zulaufende Strömungsfläche 16F bzw. Schrägfläche auf, an der das Fluid um den Ventilsitz 16 herumgelenkt wird. Alternativ ist auch eine konvexe Ausbildung des Strömungselements 16E mit einer zur Strömungsrichtung S orientierten Wölbung möglich.

Vorzugsweise ist das Strömungselement 16E über das Befestigungselement 16B mit dem Grundkörper 16A des Ventilsitzes 16 und/oder dem Ausgangsgehäuse 15 verbunden. Insbesondere ist die Ventilsitzdichtung 16D ringförmig zwischen dem Grundkörper 16A und dem Strömungselement 16E, insbesondere klemmend mittels des Befestigungselements 16B, gehalten.

Vorzugsweise ist das Ausgangsgehäuse 15 und/oder der Ventilsitz 16 ausgangsseitig in dem Ventilgehäuse 13 aufgenommen und/oder befestigt. Insbesondere ist das Ventilelement 3 ausgangsseitig über das Halteelement 14 dichtend im Ventilgehäuse 13 geführt.

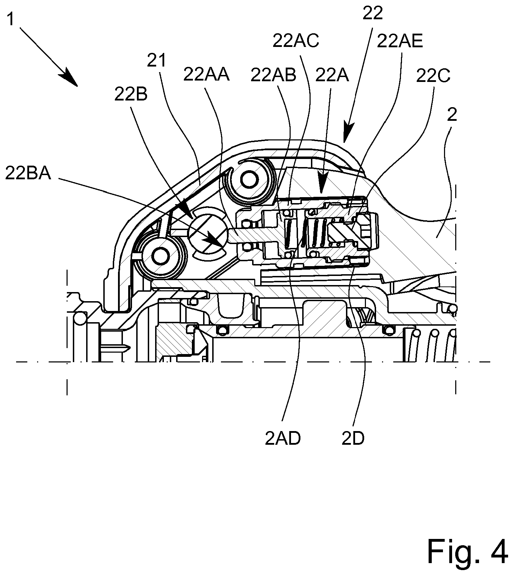

Fig. 4 zeigt eine ausschnittsweise Vergrößerung von Fig. 1 im Bereich einer Dämpfungsvorrichtung 22 des Handventils 1.

Eine "Dämpfungsvorrichtung" im Sinne der vorliegenden Erfindung ist vorzugsweise dazu ausgebildet, die Geschwindigkeit des Betätigungselements 2 und/oder des Ventilelements 3 während des Schließvorgangs des Handventils 1 zu dämpfen. Zusätzlich ist die Dämpfungsvorrichtung 22 dazu ausgebildet, auch bei ruhendem bzw. nicht bewegtem Betätigungselement 2, vorzugsweise in jeder Schwenklage des Betätigungselements 2, eine Kraft in Betätigungsrichtung B auf das Betätigungselement 2 auszuüben.

Vorzugsweise ist die Dämpfungsvorrichtung 22 durch eine Dämpfungseinrichtung 22A und hierzu korrespondierendes ein Gegenlagerelement 22B gebildet.

Vorzugsweise ist die Dämpfungseinrichtung 22A als hydraulische pneumatische und/oder mechanische Dämpfungseinrichtung, ausgebildet.

Im Darstellungsbeispiel ist die Dämpfungseinrichtung 22A zumindest im Wesentlichen im Betätigungselement 2, vorzugsweise im Betätigungsarm 2A des Betätigungselements 2, aufgenommen und/oder starr bzw. drehfest mit dem Betätigungselement 2 verbunden. In diesem Fall ist das Gegenlagerelement 22B vorzugsweise am Außengehäuse 22 vorgesehen, insbesondere hiermit verbunden. Alternativ kann die Dämpfungseinrichtung 22A auch im Außengehäuse 22 angeordnet, insbesondere hiermit verbunden sein. In diesem Fall ist es bevorzugt, dass das Gegenlagerelement 22B am Betätigungselement 2, insbesondere als Teil des Betätigungselements 2, vorgesehen ist. Besonders bevorzugt weist der Betätigungsarm 2A eine Aufnahme 2D bzw. eine, vorzugsweise zylindrische, Ausnehmung 2D zur Aufnahme der Dämpfungseinrichtung 22A auf. Die Dämpfungseinrichtung 22A ist im Darstellungsbeispiel form-, kraft- und/oder stoffschlüssig, vorzugsweise klemmend und/oder rastend mit dem Betätigungselement 2 verbunden.

Vorzugsweise weist die Dämpfungseinrichtung 22A eine Kolbenstange 22AA auf, die über einen Kolben 22AB längsverschieblich in einem Zylinder 22AC der Dämpfungseinrichtung 22A geführt ist. Insbesondere ist die Kolbenstange 22AA bzw. der Kolben 22AB mittels eines Spannelements 22AD, vorzugsweise einer Feder, insbesondere einer Schraubenfeder, gegen das Gegenlagerelement 22B, insbesondere eine Führungsfläche 22BA des Gegenlagerelements 22B, gespannt. Die Dämpfungseinrichtung 22A weist eine Schraube 22C auf, über die die Dämpfungseinrichtung 22A geöffnet oder geschlossen werden kann, beispielsweise zur Befüllung mit Hydrauliköl. Hier gibt es jedoch auch andere mögliche Lösungen.

Das Gegenlagerelement 22B kann zylindrisch oder abgerundet ausgebildet sein. Besonders bevorzugt ist das Gegenlagerelement 22B durch das Außengehäuse 21 gehalten bzw. in diesem aufgenommen. Wie bereits zuvor erwähnt, kann das Gegenlagerelement 22B jedoch auch am Betätigungselement 2 angeordnet bzw. hiermit verbunden sein. Besonders bevorzugt ist jedenfalls, dass die Dämpfungseinrichtung 22A und das Gegenlagerelement 22B derart angeordnet und eingerichtet sind, dass eine Bewegung des Betätigungselements 2 entgegen der Betätigungsrichtung B zu einer Dämpfung führt, insbesondere in dem die Kolbenstange 22AA in dem Zylinder 22AC verschoben bzw. in diesen eingeschoben wird.

Vorzugsweise ist die Kolbenstange 22AA in axialer Richtung an einer Führungsfläche 22BA des Gegenlagerelements 22B gegengelagert. Demgegenüber gibt das Gegenlagerelement 22B eine Rotationsbewegung der Kolbenstange 22AA um den Drehpunkt A frei, sodass ein Abgleiten der Kolbenstange 22AA entlang der Führungsfläche 22BA des Gegenlagerelements 22B mit der Schwenkbewegung des Betätigungselements 2 in Betätigungsrichtung B zwischen Offenstellung und der Endstellung ermöglicht wird.

Die schrittweisen Darstellungen von Fig. 5A bis 5D zeigen lediglich schematisch das Betätigungselement 2 in unterschiedlichen Stellungen ausgehend von der Endstellung gemäß Fig. 1 hin zur Offenstellung gemäß Fig. 2. Zur Erläuterung der vorschlagsgemäßen Rückstellvorrichtung 4, insbesondere der zweiten Rückstelleinrichtung 6, sind zudem am Betätigungselement 2 angreifende Kräfte sowie deren jeweiligen Abstände zu einem Bezugspunkt, beim Darstellungsbeispiel zum Drehpunkt A des Betätigungselements 2, dargestellt.

Wie bereits erwähnt, ist die vorschlagsgemäße Rückstellvorrichtung 4, insbesondere die zweite Rückstelleinrichtung 6, dazu ausgebildet, das Betätigungselement 2 über die Schließstellung hinaus in die Endstellung zu bewegen. In Fig. 5A ist das Betätigungselement 2 in dieser Endstellung dargestellt.

Um das Betätigungselement 2 ausgehend von der Schließstellung gemäß Fig. 5B entgegengesetzt zur Betätigungsrichtung B in Richtung Endstellung zu bewegen, greift die Führungsfläche 7 der zweiten Rückstelleinrichtung 6 an einem Kontaktpunkt K bzw. Angriffspunkt am schwenkbar um den Drehpunkt A gelagerten Betätigungselement 2 an. Über das Spannelement 11 der zweiten Rückstelleinrichtung 6 ist die Führungsfläche 7 mit einer normal zur Führungsfläche 7 verlaufenden Führungskraft F₂ gegen den Betätigungsarm 2A des Betätigungselements 2 gespannt. Die Führungsfläche 7 schließt einen Neigungswinkel N mit einer Tangente T an der Bewegungsrichtung B im Kontaktpunkt K ein. Die in Richtung der Tangente T wirkende Kraftkomponente F_{R2} führt über den korrespondierenden Hebelarm zwischen Drehpunkt A und Kontaktpunkt K zu einem Drehmoment entgegen der Betätigungsrichtung B.

Der Betrag der Führungskraft F₂ entspricht vorzugsweise zumindest im Wesentlichen der senkrecht zur Führungsfläche 7 wirkenden Kraftkomponente resultierend aus der Spannkraft des Spannelements 11, mit der die Führungsfläche 7 gegen das Betätigungselement 2 gespannt ist.

Zur Bewegung des Betätigungselements 2 greift in der Schließstellung des Betätigungselements 2 die Kraftkomponente F_{R2} in einem Abstand von L_{R2} bezüglich des Drehpunktes A des Betätigungselements 2 am Betätigungsarm 2A des Betätigungselements 2 an. Das so gebildete, entgegengesetzt zur Betätigungsrichtung B gerichtete Drehmoment ermöglicht somit ein Verschwenken des Betätigungselements 2 über die Schließstellung hinaus in Richtung der in Fig. 5A gezeigten Endstellung (Leerhub L).

Besonders bevorzugt bildet die Rückstellvorrichtung 4, insbesondere die zweite Rückstelleinrichtung 6, eine Haltekraftentlastung, insbesondere in der Offenstellung des Betätigungselements 2. Vorzugsweise ist die Haltekraftentlastung durch die zweite Rückstelleinrichtung 6 realisiert oder unterstützt. Dies kann dadurch erfolgen, dass die entgegen der Betätigungsrichtung B wirkende Kraftkomponente F_{R2} schwenkwinkelabhängig in Richtung oder bei der Offenstellung abnimmt.

In der in Fig. 5D gezeigten Offenstellung greift die in Richtung (einer Tangente T an) der Betätigungsrichtung B im Angriffspunkt der durch einen (nicht dargestellten) Nutzer aufzubringende Betätigungs- bzw. Haltekraft F_{H} wirkende Kraftkomponente F_{A2} der Führungskraft F₂ in einem Abstand L_{A2} zum Drehpunkt A im Kontaktpunkt K am Betätigungsarm 2A an. Das so gebildete Drehmoment ist in Betätigungsrichtung B gerichtet.

Diesem durch die Betätigungs- bzw. Haltekraft F_{H} erzeugten Drehmoment wirkt das durch die erste Rückstelleinrichtung 5 am Betätigungselement 2 eingeleitete Drehmoment entgegen. Das durch die erste Rückstelleinrichtung 5 eingeleitete Drehmoment wird durch eine Rückstellkraft F₁ im Abstand L₁ des Wirkabschnitts 23 bzw. dessen Wirkbereichs 24, 25 vom Drehpunkt A erzeugt. Die Rückstellkraft F₁ ist die Kraft, die das Spannelement 5 über das Ventilelement 3 auf das Betätigungselement 2 ausübt.

Alternativ oder zusätzlich wirkt dem durch die Betätigungs- bzw. Haltekraft F_{H} das durch die zweite Rückstelleinrichtung 6 eingeleitete Drehmoment entgegen. Dieses Drehmoment wird durch die entgegen der Betätigungsrichtung B oder dessen Tangente T im Kontaktpunkt K wirkende Kraftkomponente F_{R2} im Abstand des Kontaktpunkts K vom Drehpunkt A gebildet.

Durch die Neigung der Führungsfläche 7 gegenüber der Betätigungsrichtung B bzw. dessen Tangente T im Kontaktpunkt K wird das Drehmoment, das durch die zweite Rückstelleinrichtung 6 entgegen der Betätigungsrichtung B erzeugt wird, in Offenstellung minimal, wenn nicht sogar negativ. Der zwischen der Führungskraft F₂ und der Betätigungsrichtung B eingeschlossene Winkel N beträgt vorzugsweise mehr als 70° und/oder weniger als 110°, insbesondere mehr als 80° und/oder weniger als 100°. Besonders bevorzugt beträgt der eingeschlossene Winkel N etwa 90°. Hierdurch wird die in Betätigungsrichtung B resultierende Kraftkomponente zu (nahezu) null, so dass in der Offenstellung nur noch eine geringe oder keine Rückstellkraft oder eine negative Rückstellkraft entgegen der Betätigungsrichtung B von der zweiten Rückstelleinrichtung 6 ausgeht.

Folglich verringert sich die durch einen (nicht dargestellten) Nutzer aufzubringende Haltekraft F_{H}, die zur Erzielung eines Momentengleichgewichts bzw. Kompensation des durch Rückstellvorrichtung 4 eingeleiteten, entgegen der Betätigungsrichtung B gerichteten Moments notwendig ist.

Es ist jedoch bevorzugt, dass von der Betätigungs- bzw. Haltekraft F_{H} abgesehen die Summe aller am Betätigungselement 2 angreifenden Drehmomente entgegen der Betätigungsrichtung B gerichtet und ungleich Null ist, was vorzugsweise durch die erste Rückstelleinrichtung 5 gewährleistet wird. Hierdurch wird sichergestellt, dass bei Wegfall der Betätigungs- bzw. Haltekraft F_{H}, also wenn ein Nutzer das Betätigungselement 2 loslässt, das Handventil 1 sicher schließt.

Gemäß einem weiteren Erfindungsaspekt ist die zweite Rückstelleinrichtung 6 dazu ausgebildet, nach Erreichen der Schließstellung des Betätigungselements 2 eine Kraft entgegen der Betätigungsrichtung B auf das Betätigungselement 2 auszuüben, die größer als die durch die Dämpfungsvorrichtung 22 auf das Betätigungselement 2 ausgeübte Kraft ist.

In der Endstellung des Betätigungselements 2 gemäß Fig. 5A übt eine durch die Dämpfungsvorrichtung 22, beispielsweise durch ein Spannelement wie eine Feder, eingeleitete Kraft, im Folgenden Dämpferkraft F_{D} genannt, an einem Angriffspunkt mit einem Abstand L_{D} zur Drehachse A des Betätigungselements 2 ein in Betätigungsrichtung B des Betätigungselements 2 gerichtetes Drehmoment auf das Betätigungselement 2 aus.

Besonders bevorzugt ist das Handventil dazu ausgebildet, dass die Dämpfungsvorrichtung 4 ein entgegen der Betätigungsrichtung B gerichtetes Drehmoment erzeugt, das das durch die Dämpfungsvorrichtung 4 in das Betätigungseinrichtung 2 eingeleitete Drehmoment, vorzugsweise stets bzw. in jeder Stellung des Betätigungselements 2, übersteigt bzw. überkompensiert.

Fig. 5C zeigt das Betätigungselement 2 in einer Zwischenstellung bzw. Schaltstellung, in der eine Änderung der Neigung N der Führungsfläche 7 zur Verbindungslinie V zwischen Drehpunkt A und Kontaktpunkt K erfolgt. Insbesondere verringert sich der Neigungswinkel N der Führungsfläche 7 ausgehend von der Offenstellung des Betätigungselements 2 entgegengesetzt zur Betätigungsrichtung B. Dies geht mit einer Erhöhung der Kraftkomponente F_{R2} der Führungskraft F₂ entgegen der Betätigungsrichtung B und somit des Drehmoments F_{R2}L_{R2} entgegen der Betätigungsrichtung B einher. Dies unterstützt den Schließvorgang des Handventils nach dem Loslassen des Handventils 1 bzw. nach Wegfall der Haltekraft F_{H} nach Verlassen der Offenstellung.

Die schrittweisen Darstellungen von Fig. 6A bis 6D zeigen korrespondierend zu den Fig. 5A bis 5D Stellungen des Betätigungselements 2, die ergänzend zu den voranstehenden Betrachtungen hinsichtlich ihrer kinematischen Zuständen erläutert werden.

Die Tangente T an der Betätigungsrichtung B, die vorzugsweise durch einen Kreisbogen um den Drehpunkt A oder eine Tangente des Kreisbogens im Relevanten Punkt gebildet ist, steht senkrecht auf der Verbindungslinie V zwischen Drehpunkt A und Kontaktpunkt K.

Vorzugsweise ist das Führungselement 8, das mit der Führungsfläche F den Kontaktpunkt K bildet, mit dem Betätigungselement 2 gemeinsam in Betätigungsrichtung B bewegbar. Insbesondere entspricht der durch das Führungselement 7 zurückgelegte Weg einem, schematisch angedeuteten Kreisbogen, wobei der Mittelpunkt durch den Drehpunkt A und der Radius durch den Abstand zwischen dem Drehpunkt A und dem Kontaktpunkt K zwischen der Führungsfläche 7 und dem Führungselement 8 - angedeutet durch eine Verbindungslinie V - gegeben ist.

Fig. 6A zeigt das Betätigungselement 2 in der Endstellung. Dabei ist ein erster Führungsabschnitt 7A der Führungsfläche 7 gegen das Führungselement 8 gespannt.

Im Kontaktpunkt K in der Endposition weist die Bewegungsrichtung B des Führungselements 8 eine Bewegungsrichtungstangente T auf, die der Tangente des zuvor definierten Kreisbogens entspricht. Vorzugsweise schließt die Bewegungsrichtungstangente T des Führungselements 8 mit einer Führungsflächentangente F des ersten Führungsabschnitts 7A der Führungsfläche 7 einen ersten Führungswinkel W ein.

Zum Betätigen des Handventils 1 wird das Führungselement 7 zusammen mit dem Betätigungselement 2 in Betätigungsrichtung B bewegt, also rollt und/oder gleitet in Betätigungsrichtung B entlang des ersten Führungsabschnitts 7A auf der Führungsfläche 7 ab. Vorzugsweise ist die Schwenkbewegung des Führungselements 7 in Betätigungsrichtung von einer Linearbewegung der Führungsfläche in Bewegungsrichtung R überlagert.

Zunächst wird der zwischen Endstellung und Schließstellung des Betätigungselements 2 gebildete Leerhub L überwunden, ehe das Betätigungselement 2 in der Schließstellung und in der weiteren Bewegung aus der Schließstellung in Betätigungsrichtung B öffnend auf das Ventilelement 3 wirkt. Die Schließstellung des Betätigungselements 2 bzw. die Position des Angreifens des Betätigungselements 2 am Ventilelement 3 zeigt Fig. 6B.

Der zwischen einer Tangente F an der Führungsfläche 7 im ersten Führungsabschnitt 7A und der Tangente T an der Betätigungsrichtung B im Kontaktpunkt K eingeschlossene Führungswinkel W verändert sich bei Bewegung aus der Endstellung in die Schließstellung, die in Fig. 6B gezeigt ist, nicht oder nur unwesentlich.

Insbesondere verringert sich der Führungswinkel W nur geringfügig. Gleichzeitig wird das Spannelement 11 der zweiten Rückstelleinrichtung 6 durch Verschieben des Rückstellelements 9 stärker gespannt. So kann eine aufgrund des geringfügig verringerten Führungswinkels W geringfügig verringert in Bewegungsrichtung B auf das Betätigungselement 2 gerichtete Kraftkomponente F_{R2} aufgrund der durch das Spannelement 11 vergrößerten Kraft F₂ insgesamt etwa gleichbleiben.

Fig. 6C zeigt das Betätigungselement 2 in der Zwischenstellung. In dieser Zwischenstellung ist das Ventilelement 3 bereits vom Ventilsitz 16 abgehoben, wobei die Freigabestellung noch nicht erreicht ist. Beim der Zwischenstellung wechselt der Kontaktpunkt K von dem ersten Führungsabschnitt 7A zum zweiten Führungsabschnitt 7B. Der zweite Führungsabschnitt 7B schließt mit der Verbindungslinie V einen wesentlich kleineren Winkel N ein als der erste Führungsabschnitt 7A. Folglich verringert sich die entgegen der Betätigungsrichtung B bzw. deren Tangente im Kontaktpunkt K wirksame Kraft F_{R2} wesentlich, so dass zur Bewegung des Betätigungselements zwischen der Zwischenstellung und der Offenstellung eine geringere Betätigungs- bzw. Haltekraft H aufzuwenden ist, im Vergleich zu der Betätigungs- bzw. Haltekraft H, die zur Bewegung des Betätigungshebels 2 zwischen der Schließstellung und der Zwischenstellung benötigt wird.

Insbesondere gleitet bzw. rollt das Führungselement 7 vom ersten Führungsabschnitt 7A auf den zweiten Führungsabschnitt 7B der Führungsfläche 7 ab. Vorzugsweise verringert sich mit Erreichen des zweiten Führungsabschnitts 7B das aufzubringende Betätigungsmoment in Betätigungsrichtung B. Aufgrund des verringerten Neigungswinkels N des zweiten Führungsabschnitts 7B gegenüber dem ersten Führungsabschnitt 7A kann die entgegen der Betätigungsrichtung B bzw. deren Tangente T wirksame Kraftkomponente F_{A2} der Führungskraft F₂ der zweiten Rückstelleinrichtung 6 der Rückstellkraft F₁ bzw. des hierdurch hervorgerufenen Moments der ersten Rückstelleinrichtung 5 entgegenwirkten und somit den weiteren Öffnungsvorgang des Handventils 1 erleichtern.

Fig. 6D zeigt die Situation zwischen dem Führungselement 8 und der Führungsfläche 7 in der Offenstellung des Betätigungselements 2. In dieser Position schließt die Bewegungsrichtungstangente T mit einer Führungsflächentangente F' des zweiten Führungsabschnitts 7B der Führungsfläche 7 einen Führungswinkel W' ein, der kleiner als der Führungswinkel W in der Schließstellung des Betätigungselements 2 ist, vorzugsweise mehr als 10°, insbesondere mehr als 15°.

In der Handhabung bewirkt dies, dass beim Loslassen des Betätigungshebels 2 zunächst eine vergleichsweise geringe Beschleunigung des Betätigungselements 2 entgegen der Betätigungsrichtung B erfolgt, ehe nach Überwinden der in Fig. 6C dargestellten Zwischenposition aufgrund des erhöhten Führungswinkels W des ersten Führungsabschnitts 7A eine Erhöhung der Beschleunigung des Führungselements 8 und/oder des Betätigungselements 2 entgegen der Betätigungsrichtung B erfolgt. Dies trägt zu einem sicheren Schließen bei gelichzeitig komfortabler Bedienung bei.

Beim Darstellungsbeispiel ist die Führungsfläche 7 stufenförmig ausgebildet, der Übergang zwischen der ersten Führungsfläche 7A und der zweiten Führungsfläche 7B ist also verhältnismäßig abrupt bzw. diskontinuierlich. Hier sind jedoch auch andere Ausbildungen, beispielsweise eine abgerundete Außenfläche der Führungsfläche 7, wodurch eine kontinuierlichere Änderung des Führungswinkels W mit Bewegung des Betätigungselements 2 erfolgt.

Alternativ oder zusätzlich weist die Führungsfläche 7 einen, vorzugsweise nockenartigen, Halteabschnitt auf, der in der Offenstellung des Betätigungselements eine Kraft auf das Führungselement 8 in Betätigungsrichtung B und/oder ein in Betätigungsrichtung B gerichtetes Drehmoment auf das Betätigungselement 2 einleitet. Dies kann durch einen Neigungswinkel W größer 90° erreicht werden, aus dem eine Kraftkomponente F_{R2} resultiert, die in Betätigungsrichtung B bzw. deren Tangente T gerichtet ist.

Vorzugsweise sind die durch die Rückstellvorrichtung 4 eingeleiteten entgegen der Betätigungsrichtung 2 wirksamen Drehmomente (insbesondere also das durch die Rückstellvorrichtung 4 hervorgerufene Drehmoment) stets größer als die Summe aller innerhalb des Handventils 1 auf das Betätigungselement 2 in Betätigungsrichtung B wirkenden Drehmomente (insbesondere das durch die Dämpfungseinrichtung 22A hervorgerufene Drehmoment). Dies gewährleistet, dass sich das Betätigungselement 2 nach dem Wegfall der Haltekraft F_{H} stets eigenständig bzw. automatisch entgegen der Betätigungsrichtung B in Schließstellung und/oder Endstellung bewegt und das Handventil 1 selbsttägig schließt.

Fig. 7 zeigt eine Seitenansicht des vorschlagsgemäßen Handventils 1, wobei ein Teil des Außengehäuses 21 in der Darstellung weggeschnitten ist.

Vorzugsweise ist das Ventilelement 3 über einen Wirkabschnitt 23 antreibbar bzw. das Betätigungselement 2 wirkt mit seinem Wirkabschnitt 23 auf in Öffnungsrichtung Ö auf das Ventilelement.

Dieser Wirkabschnitt 23 ist vorzugsweise dazu ausgebildet, ausgehend von der Sperrstellung in Öffnungsrichtung Ö gegen die Spannkraft der ersten Rückstelleinrichtung 5 und ggfs. durch den Fluiddruck bedingte, entgegen der Öffnungsrichtung Ö des Ventilelements 3 gerichtete Kräfte zu überwinden und das Ventilelement 3 zur Öffnen des Handventils 1 entlang der Öffnungsrichtung Ö hin zur Freigabestellung zu bewegen. Hierzu interagieren der Wirkabschnitt 23 und das Ventilelement 3 zumindest zwischen der Sperrstellung und der Freigabestellung des Ventilelements 3, insbesondere indem der Wirkabschnitt 23 an einer Schulter des Ventilelements 3 anliegt und eine Kraft auf das Ventilelement 3 in Öffnungsrichtung Ö bewirkt.

Vorzugsweise ist der Wirkabschnitt 23 dem Betätigungselement 2, insbesondere dem Betätigungsschenkel 2B des Betätigungshebels 2, zugeordnet bzw. wird durch diesen gebildet. Besonders bevorzugt bildet der Wirkabschnitt 23 zusammen mit dem Betätigungselement 2 eine Getriebevorrichtung, vorzugsweise ein Hebelgetriebe, insbesondere ein einseitiges Hebelgetriebe bzw. einen zumindest im Wesentlichen einseitigen Hebel.

Der Begriff "einseitiger Hebel" wird vorzugsweise breit verstanden und schließt auch Bauformen ein, bei denen zwischen dem Hebelarm L_{R2} zwischen Drehpunkt A und Kontaktpunkt K einerseits und dem Hebelarm L_{D} zwischen Drehpunkt A und Wirkabschnitt 23 andererseits ein Winkel eingeschlossen ist, der größer 0° vorzugsweise jedoch geringer als 90° beträgt. Ein einseitiger Hebel ist vorzugsweise dadurch gekennzeichnet, dass der Wirkabschnitt 23 und der Kontaktpunkt K auf derselben Seite einer durch den Drehpunkt A gedachten Ebene vorgesehen sind. Hier sind jedoch auch andere Lösungen möglich.

Der Wirkabschnitt 23 ist vorzugsweise dazu ausgebildet, als mechanischer Kraftwandler über zwei unterschiedliche Wirkbereiche 24 und 25 eine am Betätigungselement 2 eingeleitete Betätigungs- bzw. Haltekraft H unterschiedlich stark über- bzw. untersetzt über eine Führungsfläche 26 des Ventilelements 2 in das Ventilelement einzuleiten. Hierzu ist vorzugsweise vorgesehen, dass die Wirkbereiche 24, 25 unterschiedliche Abstände zum Drehpunkt A aufweisen.

Vorzugsweise greift der erste Wirkbereich 24 in einem ersten Abstand L1 bezüglich des Drehpunktes A und greift der zweite Wirkbereich 24 in einem zweiten, gegenüber dem ersten Abstand L1 vergrößerten zweiten Abstand L2 bezüglich des Drehpunktes A an der Führungsfläche 26 des Ventilelements 3 an.

Beim Darstellungsbeispiel sind die Wirkbereiche 24, 25 als Laufrollen ausgebildet. Alternativ ist es jedoch auch möglich, die Wirkbereiche 24, 25 als Gleitelemente und/oder einstückig mit dem Wirkabschnitt 23 und/oder dem Betätigungselement 2 auszubilden. Beispielsweise sind die Wirkbereich C 24, 25 direkt am Betätigungsschenkel 2B des Betätigungselements 2 angeformt. Hierzu kann es zweckmäßig sein, die Wirkbereiche 24, 25 verstärkt bzw. aus einem Material mit einer erhöhten Abriebfestigkeit gegenüber dem sonstigen Material des Betätigungselements 2 auszubilden. Die Wirkbereiche 24, 25 können auch kontinuierlich ineinander übergehen.

Fig. 8A bis 8D zeigen ausschnittsweise Vergrößerungen von Fig. 7 mit vier unterschiedlichen Wirkzuständen zwischen der Führungsfläche 26 des Ventilelements 3 und dem Wirkabschnitt 23 des Betätigungselements 2 bzw. Betätigungsschenkels 2B. Die gezeigten schrittweisen Wirkzustände korrespondieren vorzugsweise zu den in Fig. 5A bis 5D bzw. 6A bis 6D gezeigten Stellungen des Betätigungselements 2.

In Fig. 8A sind in der Endstellung des Betätigungselements 2 die Wirkbereiche 24 und 25 von der Führungsfläche 26 des Ventilelements 2 um den Leerhub L abgehoben angeordnet. Beim Darstellungsbeispiel weist die Führungsfläche 26 einen ersten Führungsabschnitt 26A und einen zweiten Führungsabschnitt 26B auf, die zueinander geneigt sein können.

Die Wirkung zwischen dem Betätigungselement 2 und dem Ventilelement 3 beginnt mit Erreichen der Schließstellung des Betätigungselements 2, nachdem dieses ausgehend von der Endstellung in Betätigungsrichtung B bewegt, insbesondere geschwenkt, wurde. In der Schließstellung gelangt der Wirkabschnitt 23 in Anlage an das Ventilelement 3, um im Folgenden eine Kraft in Öffnungsrichtung Ö bewirken zu können.

Fig. 8B zeigt diesen Zustand, bei dem der Wirkabschnitt 23 mit dem ersten Wirkbereich 24 an einem ersten Kontaktpunkt K1 am ersten Führungsabschnitt 26A der Führungsfläche 26 angreift. Vorzugsweise wird über den Wirkbereich 24 am Wirkpunkt K1 eine (nicht dargestellte) Wirkkraft in Öffnungsrichtung Ö auf das Ventilelement 3 ausgeübt. Diese Wirkkraft repräsentiert vorzugsweise eine Verstärkung der auf den Betätigungsarm 2A bzw. Kraftarm ausgeübten Betätigungs- bzw. Haltekraft, wobei die Verstärkung dem Verhältnis aus der Länge Kraftarms, der dem Abstand L_{R2} des Drehpunkts A vom Kontaktpunkt K entspricht, zum Lastarm, der dem Abstand L_{D} des Drehpunkts A vom Kontaktpunkt K1 des ersten Führungsabschnitts entspricht, entspricht.

In Fig. 8C befindet sich das Betätigungselement 2 in einer Zwischenstellung, die der Zwischenstellung entsprechen kann, die in Zusammenhang mit der zweiten Rückstelleinrichtung 6 beschrieben worden ist, jedoch nicht muss. Möglich ist insbesondere auch im Bewegungsverlauf des Betätigungselements B in Betätigungsrichtung B, dass zunächst die Zwischenstellung der ersten Rückstelleinrichtung 5 und erst bei weiterer Bewegung des Betätigungselements B in Betätigungsrichtung die Zwischenstellung der zweiten Rückstelleinrichtung 6 erreicht wird.

Vorzugsweise liegt in der Zwischenstellung der ersten Rückstelleinrichtung 5 der Wirkabschnitt 23 über beide Wirkbereiche 24 und 25 an der Führungsfläche 26 des Ventilelements 3 auf bzw. erfolgt in dieser Position eine Übergabe zwischen den Wirkabschnitten 23, 24. Insbesondere findet in dieser Stellung eine Übergabe der Wirkverbindung vom ersten Wirkbereich 24 hin zum zweiten Wirkbereich 25 statt.

Unmittelbar nach Überschreiten der dargestellten Zwischenstellung, also bei Bewegung des Betätigungselements B über die Zwischenstellung hinaus in die Betätigungsrichtung B, greift der Wirkabschnitt 23 mit dem zweiten Wirkbereich 25 an einem zweiten Wirkpunkt K2 an einem zweiten Führungsabschnitt 26B der Führungsfläche 26 an der Führungsfläche 26 an. Eine Besonderheit besteht darin, dass die Wirkpunkte K1, K2 unterschiedliche Abstände vom gemeinsamen Drehpunkt aufweisen.

Der vorschlagsgemäße Wirkabschnitt 23 ermöglicht vorzugsweise eine verhältnismäßig starke Untersetzung bzw. Kraftverstärkung von Betätigungs- bzw. Haltekraft H zu auf das Ventilelement 3 wirkender Kraft F_{R1}, um ein erstes Abheben des Ventilelements 3 vom Ventilsitz 16 zu erleichtern. Der Wechsel zwischen den Wirkbereichen 24, 25 ermöglicht im Folgenden eine ausreichend große Auslenkung des Ventilelements 3 in Öffnungsrichtung Ö, um einen großen fluidischen Querschnitt und geringen Flusswiderstand des Handventils 1 in Offenstellung zu ermöglichen.

Vorzugsweise wird unmittelbar benachbart zur Zwischenstellung bei Bewegung des Betätigungselement 2 in Betätigungsrichtung B über den Wirkbereich 25 am Kontaktpunkt K2 eine Wirkkraft in Öffnungsrichtung Ö auf das Ventilelement 3 ausgeübt, die geringer als die über den ersten Wirkbereich 24 am Wirkpunkt K1 ausgeübte Wirkkraft ist. Alternativ oder zusätzlich erfolgt unmittelbar benachbart zur Zwischenstellung bei Bewegung des Betätigungselement 2 in Betätigungsrichtung B bei Wirkung des zweiten Wirkbereichs 25 eine bezogen auf die Winkelgeschwindigkeit des Betätigungselements B um den Drehpunkt A schnellere Bewegung des Ventilelements 3 in Öffnungsrichtung Ö als bei Wirkung des ersten Wirkbereichs 24.

Mit dem Erreichen der Zwischenposition lässt die Kraftverstärkung der Betätigungs- bzw. Haltekraft H vorzugsweise nach, da der höhere Abstand L₂ des zweiten Wirkbereichs 25 zum Drehpunkt A eine Reduzierung des Verstärkungsverhältnisses bzw. des Hebellängenverhältnisses zwischen der Hebellänge des Betätigungsarms 2A bzw. der Verbindungsstrecke zwischen Kontaktpunkt K und Drehpunkt A und dem Abstand L₂ bewirkt.

In Fig. 8D wirkt in der Offenstellung des Betätigungselements 2 nur noch der zweite Wirkbereich 25 mit der Führungsfläche 26 des Ventilelements 3 zusammen und/oder der erste Wirkbereich 24 ist gegenüber dem ersten Führungsabschnitt 26A der Führungsfläche 26 abgehoben.

Die auf das Ventilelement 3 resultierende Kraft bzw. die durch das gegen den Betätigungselement 2 verspannte Ventilelement 3 erzeugte Gegenkraft kann sich aufgrund der Schwenkbewegung des Betätigungselements 2 mit der Schwenklage des Betätigungselements ändern. Dies führt im Darstellungsbeispiel dazu, dass ausgehend von der Schließstellung bei Bewegung in die Öffnungsstellung die Kraftverstärkung zunächst mit Bewegung des ersten Wirkabschnitts 25 am Führungsabschnitt 25A zunimmt bis zur Zwischenstellung. In der Zwischenstellung erfolgt die Änderung der Kraftverstärkung durch Verlängerung des Lastarms. Gleichzeitig kann sich durch die geänderte Neigung des zweiten Führungsabschnitts 26 B die hieraus resultierende Kraft in Öffnungsrichtung Ö ändern. Im Anschluss, also bei weiterer Bewegung aus der Zwischenstellung in die Betätigungsrichtung B, nimmt die Kraftverstärkung wieder zu. Dieses Verhalten kann durch unterschiedlich geneigte Führungsabschnitte 26A, 26B und unterschiedliche Übergänge zwischen den Wirkbereichen 24, 25 und/oder den Führungsabschnitten 26A, 26B beeinflusst werden.

Gemäß einem weiteren Aspekt der vorliegenden Erfindung weist das Handventil 1 eine Sperreinrichtung 27, 27A auf, die dazu ausgebildet ist, in der Schließstellung, der Endstellung, zwischen der Schließstellung und der Endstellung und/oder vor oder bei Erreichen der Schließstellung ausgehend von der Endstellung die Bewegung des Betätigungselements 2 in Betätigungsrichtung B zu blockieren. Hierdurch kann ein unbeabsichtigtes Öffnen wirksam unterbunden werden.

Vorzugsweise weist die Sperreinrichtung 27 ein Sperrelement 28, insbesondere einen Sperrriegel oder ein sonstiges formschlüssig sperrend wirkendes Sperrelement 28 auf. Das Sperrelement 28 hintergreift den Betätigungshebel 2, vorzugsweise den Betätigungsarm 2A, bevorzugt endseitig, insbesondere mit einem nockenartigen Sperrabschnitt 28A. Es sind aber auch andere Lösungen denkbar.

Das Sperrelement 28 ist im Darstellungsbeispiel schwenkbar um einen Drehpunkt D am Handventil 1, vorzugsweise am Außengehäuse 21 des Handventils 1, gelagert. Das Sperrelement 28 kann zum Entsperren bzw. Lösen des Betätigungselements 2 in eine dem Betätigungselement 2 abgewandte Richtung bewegbar, insbesondere schwenkbar sein.

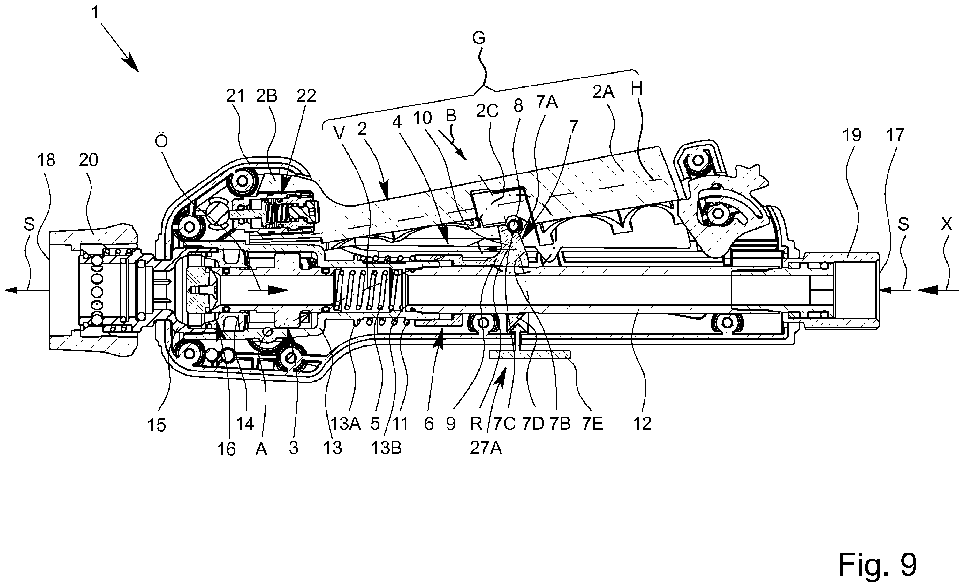

Das Handventil 1 aus Fig. 9 unterscheidet sich von dem zuvor erläuterten Handventil 1 darin, dass alternativ oder zusätzlich zur Sperreinrichtung 27 eine Sperreinrichtung 27A vorgesehen ist, die eine Bewegung des Betätigungselements 2 und/oder des Ventilelements 3 blockiert, wobei die Sperreinrichtung 27A durch die Rückstellvorrichtung 4 gebildet ist.

Im Darstellungsbeispiel weist das Rückstellelement 9 bzw. die Führungsfläche 7 einen Abschnitt 7C auf, der in der Endlage des Betätigungselements 2 das Führungselement 8 derart hintergreift, dass durch das Führungselement 8 keine axiale Kraftkomponente erzeugt wird, die das Rückstellelement 9 verschieben würde. Hierdurch blockiert das Rückstellelement 9 das Betätigungselement 2.

Der Blockierabschnitt 7C hintergreift vorzugsweise das Führungselement 8 und/oder verläuft zumindest im Wesentlichen parallel zur Richtung, in der das Rückstellelement 9 geführt ist. Auf diese oder andere Weise ist der Blockierabschnitt 7C dazu ausgebildet, ein Bewegen des Rückstellelements 9 durch das Betätigungselement 2 zu verhindern.

Der Blockierabschnitt 7C des Rückstellelements 9 grenzt vorzugsweise (unmittelbar) an den ersten Führungsabschnitt 7A an und/oder ist durch den ersten Führungsabschnitt 7A vom zweiten Führungsabschnitt 7B getrennt.

Weiter ist das Rückstellelement 9 vorzugsweise mittels eines Freigabeelements 7E in eine Position bewegbar, in der eine axiale Kraftkomponente durch das Führungselement 8 auf das Rückstellelement 9 im ersten Führungsabschnitt 7A ermöglicht wird. Zu weiteren Details wird auf die vorstehende Beschreibung in Zusammenhang mit Fig. 1 bis 8 verwiesen.

Die Freigabeeinrichtung 7E wirkt vorzugsweise auf die Rückstellvorrichtung 4, um eine durch die Rückstellvorrichtung 4 gebildete Blockade des Betätigungselements 2 aufzuheben. Vorzugsweise ist die Freigabeeinrichtung 7E dazu ausgebildet, das Rückstellelement 9 der Rückstellvorrichtung 4 derart zu bewegen, dass die Führungsfläche 7 für das Betätigungselement 2 aus einer das Betätigungselement 2 blockierenden Stellung in eine das Betätigungselement 2 freigebende bzw. rückstellende Stellung gelangt.

Im Darstellungsbeispiel weist die Freigabeeinrichtung 7E einen stößelartigen Aktuator auf, der mit einer schrägen Führungsfläche 7D des Rückstellelements 9 zusammenwirkt, um das Rückstellelement 9 in eine Position zu verschieben, in der das Betätigungselement 2 frei wird bzw. eine axiale Kraftkomponente zur Verschiebung des Rückstellelements 9 bewirken kann.

Im Darstellungsbeispiel ist die Freigabeeinrichtung 7E knopfartig oder hebelartig ausgebildet und/oder auf einer dem Betätigungselement 2 abgewandten Seite des Handventils 1 angeordnet.

Die Freigabeeinrichtung 7E ist vorzugsweise von dem Betätigungselement 2 getrennt realisiert. Vorzugsweise ist die Freigabeeinrichtung 7E unabhängig vom Betätigungselement 2 realisiert. Sie wirkt vorzugsweise mittels der Kulissenführung oder Führungsfläche 7D auf die Rückstellvorrichtung 4. Es sind aber auch andere Lösungen denkbar.

Unterschiedliche Aspekte der vorliegenden Erfindung können auch unabhängig voneinander und in unterschiedlichen Kombinationen realisiert werden und vorteilhaft sein.

**Bezugszeichenliste:**

| | | | |
|---|---|---|---|
| 1 | Handventil | 13 | Ventilgehäuse |
| 2 | Betätigungselement | 13A | Halteabschnitt (zweite Rückstelleinrichtung) |
| 2A | Betätigungsarm | 13B | Halteabschnitt (erste Rückstelleinrichtung) |
| 2B | Betätigungsschenkel | 14 | Halteelement |
| 2C | Fenster | 15 | Ausgangsgehäuse |
| 2D | Aufnahme | 16 | Ventilsitz |
| 3 | Ventilelement | 16A | Grundkörper |
| 3A | Kanalabschnitt | 16B | Befestigungselement (Ventilsitz) |
| 3B | eingangsseitige Dichtfläche | 16C | Dichtungsaufnahme |
| 3C | Dichtungselement (eingangsseitige Dichtfläche) | 16D | Ventilsitzdichtung |
| 3D | ausgangsseitige Dichtfläche | 16E | Strömungselement |
| 3E | Dichtungselement (ausgangsseitige Dichtfläche) | 16F | Strömungsfläche |
| 3F | eingangsseitige Fläche | 17 | Eingang |
| 3G | ausgangsseitige Fläche | 18 | Ausgang |
| 3GA | Dichtungsabschnitt | 19 | Eingangsgehäuse |
| 3GB | Druckabschnitt | 20 | Ausgangsstutzen |
| 3H | Betätigungsabschnitt | 21 | Außengehäuse |
| 4 | Rückstellvorrichtung | 22 | Dämpfungsvorrichtung |
| 5 | erste Rückstelleinrichtung | 22A | Dämpfungseinrichtung |
| 6 | zweite Rückstelleinrichtung | 22AA | Kolbenstange |
| 7 | Führungsfläche (Rückstellelement) | 22AB | Kolben |
| 7A | erster Führungsabschnitt | 22AC | Spannelement |
| 7B | zweiter Führungsabschnitt | 22AD | Zylinder |
| 7C | Blockierabschnitt | 22AE | Befestigungsabschnitt |
| 7D | Führungsfläche | 22B | Gegenlagerelement |
| 7E | Freigabeeinrichtung | 22BA | Führungsfläche (Gegenlagerelement) |
| 8 | Führungselement | 22C | Befestigungselement (Dämpfungseinrichtung) |
| 9 | Rückstellelement | 22D | Spannelement |
| 10 | Führungsvorsprung | 22E | Führung |
| 11 | Spannelement (Rückstelleinrichtung 6) | 23 | Wirkabschnitt |
| 12 | Rohrstück | | |
| 24 | erster Wirkbereich | G | Griffbereich |
| 25 | zweiter Wirkbereich | H | Längsachse |
| 26 | Führungsfläche (Ventilelement) | K | Kontaktpunkt |
| 26A | erster Führungsabschnitt | K1 | erster Wirkpunkt |
| 26B | zweiter Führungsabschnitt | K2 | zweiter Wirkpunkt |
| 27 | Sperrvorrichtung | L | Leerhub |
| 28 | Sperrelement | L1 | erster Abstand |
| 28A | Sperrabschnitt | L1 | zweiter Abstand |
| A | Drehpunkt (Betätigungselement) | La2 | Abstand (axiale Kraftkomponente) |
| B | Betätigungsrichtung | L_{R2} | Abstand (radiale Kraftkomponente) |
| D | Drehpunkt (Sperrelement) | N | Neigungswinkel |
| F | Führungsflächentangente (erster Führungsabschnitt) | Ö | Öffnungsrichtung |
| F' | Führungsflächentangente (zweier Führungsabschnitt) | R | Bewegungsrichtung |
| F₁ | Rückstellkraft | S | Strömungsrichtung |
| F₂ | Rückstellkraft | T | Bewegungsrichtungstangente |
| F_{A2} | axiale Kraftkomponente | V | Verbindungslinie |
| F_{R2} | radiale Kraftkomponente | W | Führungswinkel (erster Führungsabschnitt) |
| F_{D} | Dämpferkraft | W' | Führungswinkel (zweiter Führungsabschnitt) |
| F_{H} | Betätigungs- bzw. Haltekraft | X | Längserstreckungsrichtung |

## Patentansprüche

1. Handventil (1) für ein Fluid, insbesondere Wasser,
wobei das Handventil (1) ein Betätigungselement (2) aufweist, das entlang einer Betätigungsrichtung (B) von einer Schließstellung in eine Offenstellung um einen Drehpunkt (A) schwenkbar ist,
wobei ein Ventilelement (3) zum Öffnen des Handventils (1) entlang einer Öffnungsrichtung (Ö) zwischen einer zur Schließstellung des Betätigungselements (2) korrespondierenden Sperrstellung des Ventilelements (3) und einer zur Offenstellung des Betätigungselements (2) korrespondierenden Freigabestellung des Ventilelements (3) bewegbar, insbesondere linear verschiebbar, ist, und
wobei das Handventil (1) eine Rückstellvorrichtung (4) aufweist, die dazu ausgebildet ist, das Betätigungselement (2) entgegengesetzt zur Betätigungsrichtung (B) zu bewegen,
wobei die Rückstellvorrichtung (4) dazu ausgebildet ist, das Betätigungselement (2) über die Schließstellung hinaus entgegengesetzt zur Betätigungsrichtung (B) in eine Endstellung zu bewegen,
**dadurch gekennzeichnet,**
**dass** die Rückstellvorrichtung (4) eine Rückstelleinrichtung (6) aufweist, die eine Führungsfläche (7) aufweist, wobei die Führungsfläche (7) an einem Kontaktpunkt (K) am Betätigungselement (2) angreift, und wobei sich der Neigungswinkel (N) der Führungsfläche (7) zu einer Verbindungslinie (V) zwischen Drehpunkt (A) und Kontaktpunkt (K) ausgehend von der Offenstellung des Betätigungselements (2) entgegengesetzt zur Betätigungsrichtung (B) verringert.

2. Handventil nach Anspruch 1, **dadurch gekennzeichnet, dass** ein Leerhub des Betätigungselements (2) zwischen der Endstellung und der Schließstellung gebildet ist, in dem eine Bewegung des Betätigungselements (2) keine dazu korrespondierende Bewegung des Ventilelements (3) induziert und/oder wobei das Ventilelement (3) in seiner Sperrstellung verbleibt, ohne dass eine Öffnung des Handventils (1) erfolgt.

3. Handventil nach Anspruch 1 oder 2, **dadurch gekennzeichnet, dass** zwischen der Endstellung und der Schließstellung eine Wirkverbindung zwischen dem Ventilelement und dem Betätigungselement aufgehoben ist.

4. Handventil nach einem der voranstehenden Ansprüche, **dadurch gekennzeichnet, dass** die Rückstellvorrichtung (4) eine erste Rückstelleinrichtung (5) und die Rückstelleinrichtung (5), welche die Führungsfläche aufweist und im Folgenden als zweite Rückstelleinrichtung (6) bezeichnet wird, aufweist, wobei die erste Rückstelleinrichtung (5) dem Ventilelement (3) und die zweite Rückstelleinrichtung (6) dem Betätigungselement (2) zugeordnet ist.

5. Handventil nach Anspruch 4, **dadurch gekennzeichnet, dass** lediglich die zweite Rückstelleinrichtung (6) dazu ausgebildet ist, das Betätigungselement (2) über die Schließstellung hinaus in die Endstellung zu bewegen.

6. Handventil nach einem der voranstehenden Ansprüche, **dadurch gekennzeichnet dass** die Führungsfläche (7) entlang einer Strömungsrichtung (S) des Fluids, relativ zum Betätigungselement (2) und/oder relativ zum Ventilelement (3) bewegbar ist.

7. Handventil nach einem der voranstehenden Ansprüche, **dadurch gekennzeichnet, dass** die Führungsfläche (7) entlang einer Bewegungsrichtung (R) bewegbar ist, wobei die Bewegungsrichtung (R) der Führungsfläche (7) beim Öffnungsvorgang des Handventils (1) entgegengesetzt zur Öffnungsrichtung (Ö) des Ventilelements (3) und/oder beim Schließvorgang des Handventils (1) in Öffnungsrichtung (Ö) des Ventilelements (3) gerichtet ist.

8. Handventil nach einem der voranstehenden Ansprüche, **dadurch gekennzeichnet, dass** ein Führungselement (8), vorzugsweise eine Laufrolle, des Betätigungselements (2) an der Führungsfläche (7) der Rückstelleinrichtung (6) aufliegt.

9. Handventil nach einem der voranstehenden Ansprüche, **dadurch gekennzeichnet, dass** die Führungsfläche (7) durch ein, bevorzugt hülsenartiges, Rückstellelement (9) gebildet ist, vorzugsweise wobei die Führungsfläche (7) durch einen, vorzugsweise nockenförmigen, Führungsvorsprung (10) des Rückstellelements (9) gebildet ist.

10. Handventil nach einem der voranstehenden Ansprüche, **dadurch gekennzeichnet, dass** die Rückstellvorrichtung (4) oder ein Teil hiervon mittels eines Spannelements (11) gegen das Betätigungselement (2) gespannt ist.

11. Handventil nach einem der voranstehenden Ansprüche, **dadurch gekennzeichnet, dass** das Handventil (1) stromauf des Ventilelements (3) ein Rohrstück (12) aufweist, vorzugsweise wobei das Rohrstück (12) zur Führung des Fluids entlang der Strömungsrichtung (S) ausgebildet ist.

12. Handventil nach Anspruch 11, **dadurch gekennzeichnet, dass** die Rückstellvorrichtung (4) insbesondere radial am Rohrstück (12) gelagert ist und/oder in axialer Richtung verschieblich, insbesondere gleitend, am Rohrstück (12) geführt ist.

13. Handventil nach Anspruch 11 oder 12, **dadurch gekennzeichnet, dass** das Handventil (1) ein Ventilgehäuse (13) aufweist, vorzugsweise wobei das Ventilgehäuse (13) mit dem Rohrstück (12) verbindbar, insbesondere wobei das Betätigungselement (2) schwenkbar am Ventilgehäuse (13) gelagert ist.

14. Handventil nach einem der voranstehenden Ansprüche, **dadurch gekennzeichnet, dass** das Handventil (1) eine Längserstreckungsrichtung (X) mit einem Eingang (17) und einem Ausgang (18) für das Fluid aufweist, wobei der Eingang (17) und der Ausgang (18) an gegenüberliegenden Enden des Handventils (1) entlang der Längserstreckungsrichtung (X) angeordnet sind.

15. Handventil nach einem der voranstehenden Ansprüche, **dadurch gekennzeichnet, dass** das Ventilelement (3) als, vorzugsweise rohrförmiger, Dichtkolben ausgebildet ist und/oder zwischen der Sperrstellung und der Freigabestellung des Ventilelements (2) entlang der Strömungsrichtung (S) des Fluids und/oder der Längserstreckungsrichtung (X) des Handventils (1) durchströmbar ist.

## Claims

1. Hand valve (1) for a fluid, in particular water,
wherein the hand valve (1) has an actuating element (2) which can be pivoted along an actuating direction (B) from a closing position into an open position about a pivot point (A),
wherein a valve element (3) for opening the hand valve (1) is movable, in particular linearly displaceable, along an opening direction (Ö) between a locking position of the valve element (3) corresponding to the closing position of the actuating element (2) and a release position of the valve element (3) corresponding to the open position of the actuating element (2), and
wherein the hand valve (1) has a resetting apparatus (4) which is designed to move the actuating element (2) in the opposite direction to the actuating direction (B),
wherein the resetting apparatus (4) is designed to move the actuating element (2) beyond the closing position in the opposite direction to the actuating direction (B) into an end position,
**characterized**
**in that** the resetting apparatus (4) has a resetting device (6) which has a guide surface (7), wherein the guide surface (7) acts on a contact point (K) on the actuating element (2), and wherein the angle of inclination (N) of the guide surface (7) with respect to a connecting line (V) between the pivot point (A) and the contact point (K) decreases, starting from the open position of the actuating element (2), in the opposite direction to the actuating direction (B).

2. Hand valve according to claim 1, **characterized in that** an idle stroke of the actuating element (2) is formed between the end position and the closing position, in which a movement of the actuating element (2) does not induce a corresponding movement of the valve element (3) and/or wherein the valve element (3) remains in its locking position without the hand valve (1) being opened.

3. Hand valve according to claim 1 or 2, **characterized in that** an operative connection between the valve element and the actuating element is cancelled between the end position and the closing position.

4. Hand valve according to one of the preceding claims, **characterized in that** the resetting apparatus (4) has a first resetting device (5) and the resetting device (5), which has the guide surface and is referred to in the following as second resetting device (6), the first resetting device (5) being assigned to the valve element (3) and the second resetting device (6) being assigned to the actuating element (2).

5. Hand valve according to claim 4, **characterized in that** only the second resetting device (6) is designed to move the actuating element (2) beyond the closing position into the end position.

6. Hand valve according to one of the preceding claims, **characterized in that** the guide surface (7) is movable along a flow direction (S) of the fluid, relative to the actuating element (2) and/or relative to the valve element (3).

7. Hand valve according to one of the preceding claims, **characterized in that** the guide surface (7) is movable along a direction of movement (R), the direction of movement (R) of the guide surface (7) being directed in the opposite direction to the opening direction (Ö) of the valve element (3) during the opening operation of the hand valve (1) and/or in the opening direction (Ö) of the valve element (3) during the closing operation of the hand valve (1).

8. Hand valve according to one of the preceding claims, **characterized in that** a guide element (8), preferably a roller, of the actuating element (2) bears on the guide surface (7) of the resetting device (6).

9. Hand valve according to one of the preceding claims, **characterized in that** the guide surface (7) is formed by a, preferably sleeve-like, resetting element (9), preferably wherein the guide surface (7) is formed by a, preferably cam-shaped, guide projection (10) of the resetting element (9).

10. Hand valve according to one of the preceding claims, **characterized in that** the resetting apparatus (4) or a part thereof is tensioned against the actuating element (2) by means of a tensioning element (11).

11. Hand valve according to one of the preceding claims, **characterized in that** the hand valve (1) has a pipe piece (12) upstream of the valve element (3), preferably wherein the pipe piece (12) is designed for guiding the fluid along the flow direction (S).

12. Hand valve according to claim 11, **characterized in that** the resetting apparatus (4) is supported in particular radially on the pipe piece (12) and/or is displaceably, in particular slidingly, guided in the axial direction on the pipe piece (12).

13. Hand valve according to claim 11 or 12, **characterized in that** the hand valve (1) has a valve housing (13), preferably wherein the valve housing (13) is connectable to the pipe piece (12), in particular wherein the actuating element (2) is pivotably mounted on the valve housing (13).

14. Hand valve according to one of the preceding claims, **characterized in that** the hand valve (1) has a longitudinal extension direction (X) with an inlet (17) and an outlet (18) for the fluid, the inlet (17) and the outlet (18) being arranged at opposite ends of the hand valve (1) along the longitudinal extension direction (X).

15. Hand valve according to one of the preceding claims, **characterized in that** the valve element (3) is designed as a, preferably tubular, sealing piston and/or can be flowed through between the locking position and the release position of the valve element (2) along the flow direction (S) of the fluid and/or the longitudinal extension direction (X) of the hand valve (1).

## Revendications

1. Soupape à main (1) pour un fluide, en particulier l'eau,
la soupape à main (1) comportant un élément d'actionnement (2) qui peut pivoter le long d'une direction d'actionnement (B) d'une position fermée à une position ouverte autour d'un point de pivotement (A),
un élément de soupape (3) pour ouvrir la soupape à main (1) étant mobile, en particulier de manière linéaire, le long d'une direction d'ouverture (Ö) entre une position de blocage de l'élément de soupape (3) correspondant à la position fermée de l'élément d'actionnement (2) et une position de libération de l'élément de soupape (3) correspondant à la position ouverte de l'élément d'actionnement (2), et
la soupape à main (1) comportant un mécanisme de rappel (4) qui est conçu pour déplacer l'élément d'actionnement (2) dans la direction opposée à la direction d'actionnement (B),
le mécanisme de rappel (4) étant conçu pour déplacer l'élément d'actionnement (2) au-delà de la position fermée dans la direction opposée à la direction d'actionnement (B) dans une position finale,
**caractérisé**
**en ce que** le mécanisme de rappel (4) comporte un dispositif de rappel (6) qui comporte une surface de guidage (7), la surface de guidage (7) s'appliquant sur un point de contact (K) de l'élément d'actionnement (2) et l'angle d'inclinaison (N) de la surface de guidage (7) par rapport à une ligne de liaison (V) entre le point de pivotement (A) et le point de contact (K) diminuant en sens inverse de la direction d'actionnement (B), à partir de la position ouverte de l'élément d'actionnement (2).

2. Soupape à main selon la revendication 1, **caractérisée en ce qu'**une course à vide de l'élément d'actionnement (2) est formée entre la position finale et la position fermée, dans laquelle un mouvement de l'élément d'actionnement (2) n'induit pas un mouvement correspondant de l'élément de soupape (3) et/ou dans laquelle l'élément de soupape (3) reste dans sa position de blocage sans que la soupape à main (1) soit ouverte.

3. Soupape à main selon la revendication 1 ou 2, **caractérisée en ce qu'**une liaison fonctionnelle entre l'élément de soupape et l'élément d'actionnement est annulée entre la position finale et la position fermée.

4. Soupape à main selon l'une des revendications précédentes, **caractérisée en ce que** le mécanisme de rappel (4) comporte un premier dispositif de rappel (5) et le dispositif de rappel (5) qui comporte la surface de guidage et est désigné ci-après par le terme de deuxième dispositif de rappel (6), le premier dispositif de rappel (5) étant associé à l'élément de soupape (3) et le deuxième dispositif de rappel (6) étant associé à l'élément d'actionnement (2).

5. Soupape à main selon la revendication 4, **caractérisée en ce que** seul le deuxième dispositif de rappel (6) est conçu pour déplacer l'élément d'actionnement (2) au-delà de la position fermée dans la position finale.

6. Soupape à main selon l'une des revendications précédentes, **caractérisée en ce que** la surface de guidage (7) est mobile le long d'une direction d'écoulement (S) du fluide, par rapport à l'élément d'actionnement (2) et/ou par rapport à l'élément de soupape (3).

7. Soupape à main selon l'une des revendications précédentes, **caractérisée en ce que** la surface de guidage (7) peut être déplacée le long d'une direction de mouvement (R), la direction de mouvement (R) de la surface de guidage (7) étant dirigée dans la direction opposée à la direction d'ouverture (Ö) de l'élément de soupape (3) pendant l'opération d'ouverture de la soupape à main (1) et/ou dans la direction d'ouverture (Ö) de l'élément de soupape (3) pendant l'opération de fermeture de la soupape à main (1).

8. Soupape à main selon l'une des revendications précédentes, **caractérisée en ce qu'**un élément de guidage (8), de préférence un rouleau, de l'élément d'actionnement (2) repose sur la surface de guidage (7) du dispositif de rappel (6).

9. Soupape à main selon l'une des revendications précédentes, **caractérisée en ce que** la surface de guidage (7) est formée par un élément de rappel (9), de préférence en forme de manchon, la surface de guidage (7) étant de preference formée par une saillie de guidage (10), de préférence en forme de came, de l'élément de rappel (9).

10. Soupape à main selon l'une des revendications précédentes, **caractérisée en ce que** le mécanisme de rappel (4) ou une partie de celui-ci est serré contre l'élément d'actionnement (2) au moyen d'un élément de serrage (11).

11. Soupape à main selon l'une des revendications précédentes, **caractérisée en ce que** la soupape à main (1) comporte une partie de tuyau (12) en amont de l'élément de soupape (3), la partie de tuyau (12) étant de préférence conçue pour guider le fluide le long de la direction d'écoulement (S).

12. Soupape à main selon la revendication 11, **caractérisée en ce que** le mécanisme de rappel (4) est monté en particulier radialement sur la partie de tuyau (12) et/ou est guidé de manière déplaçable, en particulier de manière coulissante, dans la direction axiale sur la partie de tuyau (12).

13. Soupape à main selon la revendication 11 ou 12, **caractérisée en ce que** la soupape à main (1) comporte un boîtier de soupape (13), de préférence le boîtier de soupape (13) pouvant être relié à la partie de tuyau (12), en particulier l'élément d'actionnement (2) étant monté de manière pivotante sur le boîtier de soupape (13).

14. Soupape à main selon l'une des revendications précédentes, **caractérisée en ce que** la soupape à main (1) comporte une direction d'extension longitudinale (X) avec une entrée (17) et une sortie (18) pour le fluide, l'entrée (17) et la sortie (18) étant disposées à des extrémités opposées de la soupape à main (1) le long de la direction d'extension longitudinale (X).

15. Soupape à main selon l'une des revendications précédentes, **caractérisée en ce que** l'élément de soupape (3) est conçu comme un piston d'étanchéité, de préférence tubulaire, et/ou peut être traversé par un fluide entre la position de blocage et la position de libération de l'élément de soupape (2) le long de la direction d'écoulement (S) du fluide et/ou de la direction d'extension longitudinale (X) de la soupape à main (1).
